(19)

Europäisches Patentamt

European Patent Office

Office européen des brevets

(11) **EP 4 386 633 A1**

(12) **EUROPEAN PATENT APPLICATION**
published in accordance with Art. 153(4) EPC

(43) Date of publication:
**19.06.2024   Bulletin 2024/25**

(21) Application number: **22855521.5**

(22) Date of filing: **12.08.2022**

(51) International Patent Classification (IPC):
*G06N 10/00* (2022.01)     *G06F 9/50* (2006.01)
*G06F 9/48* (2006.01)

(52) Cooperative Patent Classification (CPC):
**G06F 9/48; G06F 9/50; G06N 10/00**

(86) International application number:
**PCT/CN2022/112012**

(87) International publication number:
**WO 2023/016541 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 13.08.2021   CN 202110928873
                13.08.2021   CN 202110928874
                13.08.2021   CN 202110929047
                31.08.2021   CN 202111010785

(71) Applicant: **Origin Quantum Computing Technology**
**(Hefei) Co., Ltd**
**Hefei, Anhui 230088 (CN)**

(72) Inventors:
• **FANG, Yuan**
  **Hefei, Anhui 230088 (CN)**
• **WANG, Wentao**
  **Hefei, Anhui 230088 (CN)**
• **ZHAO, Dongyi**
  **Hefei, Anhui 230088 (CN)**
• **WANG, Jing**
  **Hefei, Anhui 230088 (CN)**
• **DOU, Menghan**
  **Hefei, Anhui 230088 (CN)**

(74) Representative: **Rau, Schneck & Hübner**
**Patentanwälte Rechtsanwälte PartGmbB**
**Königstraße 2**
**90402 Nürnberg (DE)**

(54) **QUANTUM COMPUTER OPERATING SYSTEM AND QUANTUM COMPUTER**

(57)     Disclosed are a quantum computer operating system and a quantum computer. In the operating system, if the quantity of the free qubits on a certain chip in the quantum chip cluster is not less than the quantity required by the quantum computing task, selecting a first quantum bit whose reading fidelity is within a preset range from the free qubits and obtaining a nearby pair of quantum bits based on the community detection algorithm and the greedy algorithm, and combining them to form a qubit topological structure until the number of quantum bits is equal to the number required by the quantum computing task. Finally, mapping the quantum computing task to be processed with the qubit topological structure to execute the quantum computing task to be processed.

FIG. 3

**Description**

**CROSS-REFERENCES TO RELATED APPLICATIONS**

The disclosure claims priority to a Chinese patent application No. CN202111010785.7 filed on August 31, 2021 and entitled "QUANTUM COMPUTING TASK MAPPING METHOD AND QUANTUM COMPUTER OPERATING SYSTEM", a Chinese patent application No. CN202110929047.6 filed on August 13, 2021 and entitled "QUANTUM COMPUTER OPERATING SYSTEM AND QUANTUM COMPUTER", a Chinese patent application No. CN202110928874.3 filed on August 13, 2021 and entitled "QUANTUM COMPUTER OPERATING SYSTEM AND QUANTUM COMPUTER", and a Chinese patent application No. 202110928873.9 filed on August 13, 2021 and entitled "QUANTUM COMPUTER OPERATING SYSTEM AND QUANTUM COMPUTER", which are hereby incorporated by reference in their entireties.

**TECHNICAL FIELD**

The present disclosure relates to the field of quantum computation, in particular to a quantum computer operating system and a quantum computer.

**BACKGROUND**

Quantum computing is a disruptively innovating computing method based on qubits as basic units, using quantum superposition, quantum entanglement and other characteristics, which can provide huge information carrying capacity and super large parallel computing processing power that potentially surpass classical computing technologies. Quantum computing is expected to surpass classical computing in machine learning, chemical simulation, solving linear equations and other problems.

Quantum computers are a class of physical devices that follow the laws of quantum mechanics to perform high-speed mathematical and logical operations, and to store and process quantum information. Quantum computers are mainly characterized in fast running speed, strong ability to process information, wide range of applications and so on. Unlike ordinary computers, in the case of a quantum computer, the more information it processes, the more advantageous it is to perform calculations, and the more accuracy of the calculations can be ensured.

In view of importance of an operating system to a computer, a quantum computer operating system is determinative to function, computing efficiency and stability of a quantum computer, and in turn to practicality thereof. A quantum computer operating system is a tool for connecting a terminal and a quantum chip, where quantum chip is a core component of the quantum computer, in the quantum computer. The quantum computer operating system on one hand receives quantum computing tasks sent by a user, and on the other hand it needs to map these quantum computing tasks to a specific qubit topological structure in the quantum chip in order to complete execution of these quantum computing tasks. Such a technical solution of a quantum computer operating system in the prior art severely limits the utilization of qubits in the quantum chip, causing a waste of quantum chip resources.

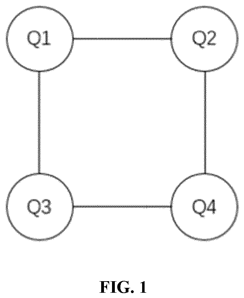

During implementation of a quantum computing task which may be of major interest to developers, typically there may be a dual-bit quantum logic gate operated on any two qubits. However, for an actual quantum chip, typically a dual-bit quantum logic gate operation is allowed only operated on qubits with direct connection; this is due to restrictions of the physical structure: as shown in FIG. 1, the qubits are arranged in a grid pattern on the quantum chip, $Q_1$, $Q_2$, $Q_3$, $Q_4$ representing the qubits.

The inventors have found in practice that when a dual-bit quantum logic gate needs to be involved in two quantum computing tasks, crosstalk inevitably occurs if the two quantum computing tasks are mapped in two qubit topological structures that are relatively close to each other, leading to a sharp increase in error rate of the dual-bit quantum logic gate. In order to avoid occurrence of crosstalk, when mapping the two quantum computing tasks by a quantum computer operating system in the prior art, if a dual-bit quantum logic gate needs to be involved in two quantum computing tasks, the qubit topological structures to which the two quantum computing tasks are mapped are spaced sufficiently far apart on the quantum chip to reduce crosstalk, as far as possible. Such a prior art solution severely limits the utilization of qubit resources in the quantum chip, resulting in a waste of quantum chip resources.

**SUMMARY**

An objective of the present disclosure provides a quantum computer operating system and a quantum computer. The quantum computer operating system can quickly find, in free qubits of a quantum chip in the system, a respective optimal partition area for each quantum computing task in a program waiting queue to execute mapping, therefore effectively improving qubit resource utilization of the quantum chip and timeliness of running quantum computing task.

In a first aspect, an embodiment of the present disclosure provides a quantum computer operating system, comprising: a quantum computing task assigning service module configured for determining a quantum computing task to be processed from currently unprocessed quantum computing tasks; a quantum chip resource configuration service module configured for obtaining a qubit topological structure from free qubits of a quantum chip based on community detection algorithm and greedy algorithm, a value of a reward function of the qubit topological structure and a quantity of qubits thereof satisfying a preset threshold, wherein the reward function is obtained through the community detection algorithm and the greedy algorithm, and the free qubits are qubits in the quantum chip that are not assigned to execute a quantum computing task; a quantum computing task mapping service module configured for mapping a quantum computing task to be processed with the qubit topological structure to execute the quantum computing task to be processed.

In a second aspect, an embodiment of the present disclosure provides an executing method for quantum computing tasks in a quantum computer, comprising: determining a quantum computing task to be processed from currently unprocessed quantum computing tasks; obtaining, a qubit topological structure whose value of a reward function and whose quantity of qubits satisfy a preset threshold, from free qubits of a quantum chip based on community detection algorithm and greedy algorithm, wherein the reward function is obtained through the community detection algorithm and the greedy algorithm, the free qubits are qubits in the quantum chip that are not assigned to execute a quantum computing task; and mapping a quantum computing task to be processed with the qubit topological structure to execute the quantum computing task to be processed.

In a third aspect, an embodiment of the present disclosure provides a quantum computer operating system, comprising: a quantum computing task receiving module configured for receiving a quantum computing task queue, wherein the quantum computing task queue comprises a plurality of quantum computing tasks; a quantum computing task priority processing module configured for obtaining a priority of each quantum computing task in the quantum computing task queue based on depth of the quantum computing task, a required quantity of qubits, and the waiting time in the quantum computing task queue, wherein the quantum computing task with the highest priority is executed first; a quantum computing task combining module configured for combining several quantum computing tasks in the quantum computing task queue into one integral quantum computing task in order of priority from high to low, and updating the quantum computing task queue; a quantum chip resource assigning service module configured for obtaining a qubit topological structure that meets a requirement from the free qubits of the quantum chip by using the community detection algorithm and the greedy algorithm based on the updated quantum computing task queue; wherein the free qubits are qubits in the quantum chip that are not assigned to execute a quantum computing task; a quantum computing task scheduling and mapping module configured for scheduling a quantum computing task to be executed based on the updated quantum computing task queue, and is configured for mapping the quantum computing task to be executed to the qubit topological structure in order of priority from high to low.

Optionally, the quantum computing task priority processing module comprises: a quantum computing task state obtaining unit configured for obtaining the depth of each quantum computing task in the quantum computing task queue, a required quantity of qubits and the waiting time in the quantum computing task queue; a quantum computing task priority obtaining unit configured for obtaining a priority of each quantum computing task, the priority of each quantum computing task is R, wherein $R=(W+1)/(n*d)$, W is the waiting time in the quantum computing task queue for the quantum computing task, n is the quantity of qubits required for the quantum computing task, and d is the depth of the quantum computing task.

Optionally, said "meets a requirement" comprises: the quantity of qubits in the qubit topological structure is equal to the quantity of qubits required by the quantum computation task currently to be executed, and the tightness of the qubit topological structure, the reading fidelity of all qubits in the qubit topological structure, the reliability parameters for executing the dual-bit quantum logic gate in the qubit topological structure, and the quantity of feedback lines in the qubit topological structure all meet preset thresholds.

Optionally, further comprises: a coherent time obtaining and judging module, which is configured for obtaining the coherence time of the free qubits in the quantum chip, and determining whether the coherence time of each of the free qubits is greater than the first threshold, wherein the first threshold is determined according to the execution time of the quantum computing task currently to be processed; a quantum chip resource discrimination module, which is configured for setting the corresponding qubit as an unavailable qubit when the judgment result is no, and does not classify the unavailable qubits into the qubit topological structure.

In a fourth aspect, an embodiment of the present disclosure provides a processing method for quantum computing tasks in a quantum computer, comprising: receiving a quantum computing task queue, wherein the quantum computing task queue comprises a plurality of quantum computing tasks; obtaining a priority of each quantum computing task in the quantum computing task queue based on depth of the quantum computing task, a required quantity of qubits, and the waiting time in the quantum computing task queue, wherein the quantum computing task with the highest priority is executed first; combining several quantum computing tasks in the quantum computing task queue into one integral quantum computing task in order of priority from high to low, and updating the quantum computing task queue; obtaining a qubit topological structure that meets a requirement from the free qubits of the quantum chip by using the community detection algorithm and the greedy algorithm based on the updated quantum computing task queue; wherein, the free qubits are qubits in the quantum chip that are not assigned to execute a quantum computing task; scheduling a quantum computing task to be executed based on the updated quantum computing task queue, and mapping the quantum computing task to be executed to the qubit topological structure in order of priority from high to low.

Optionally, said "obtaining a priority of each quantum computing task in the quantum computing task queue based on depth of the quantum computing task, a required quantity of qubits, and the waiting time in the quantum computing task queue" comprises: obtaining the depth of each quantum computing task in the quantum computing task queue, a required quantity of qubits and the waiting time in the quantum computing task queue; obtaining the priority of each quantum computing task, the priority of each quantum computing task is R, wherein $R=(W+1)/(n*d)$, W is the waiting time in the quantum computing task queue for the quantum computing task, n is the quantity of qubits required for the quantum computing task, and d is the depth of the quantum computing task.

Optionally, said "meets a requirement" comprises: the quantity of qubits in the qubit topological structure is equal to the quantity of qubits required by the quantum computation task currently to be executed, and the tightness of the qubit topological structure, the reading fidelity of all qubits in the qubit topological structure, the reliability parameters for executing the dual-bit quantum logic gate in the qubit topological structure, and the quantity of feedback lines in the qubit topological structure all meet preset thresholds.

Optionally, the processing method further comprises: obtaining the coherence time of the free qubits in the quantum chip, and judging whether the coherence time of each of the free qubits is greater than the first threshold, wherein, the first threshold is determined according to the execution time of the quantum computing task currently to be processed; setting the corresponding qubit as an unavailable qubit when the judgment result is no, and the quantum chip resource configuration service module will not partition the unavailable qubit into the qubit topological structure.

In a fifth aspect, an embodiment of the present disclosure provides a quantum computer operating system, comprising: a quantum computing task receiving module configured for receiving a quantum computing task queue, wherein the quantum computing task queue comprises a plurality of quantum computing tasks; a quantum computing task combining module configured for combining several quantum computing tasks in the quantum computing task queue into one integral quantum computing task; a quantum chip resource configuration service module configured for obtaining a qubit topological structure in a quantum chip based on the integral quantum computing task; a quantum computing task mapping service module configured for mapping the integral quantum computing task with the qubit topological structure to execute the integral quantum computing task.

Optionally, the quantum computer operating system further comprises: a queue priority processing module configured for setting a priority of each quantum computing task in the quantum computing task queue based on depth of the quantum computing task, a required quantity of qubits, and the waiting time in the quantum computing task queue, wherein the quantum computing task with the highest priority is executed first. Optionally, the quantum computing task combining module combines several quantum computing tasks with the highest priority in the quantum computing task queue into the integral quantum computing task.

Optionally, the quantum computer operating system further comprises: a quantum computing task timing obtaining module configured for obtaining the timing of each quantum logic gate in the integral quantum computing task; a qubit calibrating module configured for performing a calibration operation based on the timing on qubits in the qubit topological structure where crosstalk exists.

Optionally, the quantum computing task combining module comprises: a quantum computing task execution time obtaining unit configured for obtaining a first time required to execute the first quantum computing task and a second time required to execute the second quantum computing task, wherein the first and second quantum computing tasks are two quantum computing tasks in the quantum computing task queue; a judging unit configured for judging whether the first time and the second time satisfy: the first time is less than or equal to twice the second time; a combination executing unit configured for combining the first quantum computing task and the second quantum computing task into the integral quantum computing task when the judgment result is yes.

Optionally, the topological structure comprises multiplexing qubits, wherein the multiplexing qubits is used to execute different quantum computing tasks separately at different moments.

Optionally, the quantum chip resource configuration service module comprises: a multiplexing bits obtaining unit configured for obtaining the multiplexing qubits in the quantum chip based on the timing of each quantum logic gate in the integral quantum computing task.

In a sixth aspect, an embodiment of the present disclosure provides a processing method for quantum computing tasks in a quantum computer, comprising: receiving a quantum computing task queue, wherein the quantum computing task queue comprises a plurality of quantum computing tasks; combining several quantum computing tasks in the quantum computing task queue into one integral quantum computing task; obtaining the qubit topological structure in the quantum chip based on the integral quantum computing task; mapping the integral quantum computing task with the qubit topological structure to execute the integral quantum computing task.

Optionally, further comprising: obtaining the timing of each quantum logic gate in the integral quantum computing task; performing a calibration operation based on the timing on a qubit with crosstalk in the qubit topological structure.

Optionally, said "combining several quantum computing tasks in the quantum computing task queue into one integral quantum computing task" comprises: obtaining a first time required to execute the first quantum computing task and a second time required to execute the second quantum computing task, wherein the first and second quantum computing tasks are two quantum computing tasks in the quantum computing task queue, the first time is greater than the second time; judging whether the first time and the second time satisfy: the first time is less than or equal to twice the second time; combining the first quantum computing task and the second quantum computing task into the integral quantum computing task when the judgment result is yes.

Optionally, the processing method further comprises: setting a priority of each quantum computing task in the quantum computing task queue based on depth of the quantum computing task, a required quantity of qubits, and the waiting time in the quantum computing task queue, wherein the quantum computing task with the highest priority is executed first.

Optionally, the first quantum computing task and the second quantum computing task are two quantum computing tasks with the highest priority in the quantum computing task queue.

In a seventh aspect, an embodiment of the present disclosure provides a quantum computing task mapping method, comprising: obtaining a first qubit whose qubit parameter meets a requirement from free qubits of a target quantum chip to form a first topological structure, wherein the qubit parameter characterizes the state of a qubit, the free qubits are qubits in a idle state in the target quantum chip; judging whether the quantum computing task to be executed can be executed in the first topological structure; if yes, mapping the quantum computing task to be executed to the first topological structure; if not, updating the first topological structure based on the free qubits with direct connection to the first topological structure, and then returning to the step of judging whether the quantum computing task to be executed can be executed in the first topological structure.

Optionally, said "updating the first topological structure based on the free qubits with direct connection to the first topological structure", comprises: obtaining the free qubits with direct connection to the first topological structure as to-be-partitioned qubits, wherein each of the to-be-partitioned qubits respectively forms one integral structure with the first topological structure; according to the tightness of the integral structure, selecting one of all the to-be-partitioned qubits and partitioning it into the first topological structure so as to update the first topological structure.

Optionally, said "updating the first topological structure based on the free qubits with direct connection to the first topological structure", comprises: obtaining the free qubits with direct connection to the first topological structure as to-be-partitioned qubits, wherein each of the to-be-partitioned qubits respectively forms one integral structure with the first topological structure; according to fidelity parameters of qubits in the integral structure, selecting one of all the to-be-partitioned qubits and partitioning it into the first topological structure so as to update the first topological structure, wherein the fidelity parameters comprises one or a combination of reading fidelity, fidelity of any one qubit when performing a single-bit quantum logic gate operation, and fidelity of any two qubits with a direct connection relation when performing a dual-bit quantum logic gate operation therebetween.

Optionally, said "updating the first topological structure based on the free qubits with direct connection to the first topological structure", comprises: obtaining the free qubits with direct connection to the first topological structure as to-be-partitioned qubits, wherein each of the to-be-partitioned qubits respectively forms one integral structure with the first topological structure; according to the quantity of feedback lines in the integral structure, selecting one of all the to-be-partitioned qubits and partitioning it into the first topological structure so as to update the first topological structure, wherein the feedback lines couple several qubits in the quantum chip and transmit quantum state information.

Optionally, said "updating the first topological structure based on the free qubits with direct connection to the first topological structure", comprises: obtaining the free qubits with direct connection to the first topological structure as to-be-partitioned qubits, wherein each of the to-be-partitioned qubits respectively forms one integral structure with the first topological structure; according to the tightness of the integral structure, the fidelity parameters of the qubits in the integral structure, and the quantity of feedback lines, selecting one of all the to-be-partitioned qubits and partitioning it into the first topological structure so as to update the first topological structure, wherein the fidelity parameters comprises one or a combination of reading fidelity, fidelity of any one qubit when performing a single-bit quantum logic gate operation, and fidelity of any two qubits with a direct connection relation when performing a dual-bit quantum logic gate operation therebetween, and the feedback lines couple several qubits in the quantum chip and transmit quantum state information.

Optionally, said "according to the tightness of the integral structure, the fidelity parameters of the qubits in the integral structure, and the quantity of feedback lines, partitioning several to-be-partitioned qubits into the first topological structure so as to update the first topological structure", comprises: determining respective weight coefficients of the tightness, the fidelity parameters and the quantity of feedback lines according to the quantum computing task to be executed and the target quantum chip; based on the determined weight coefficients, partitioning several to-be-partitioned qubits into the first topological structure according to the tightness of the integral structure, the fidelity parameters of the qubits in the integral structure, and the quantity of feedback lines, so as to update the first topological structure.

Optionally, the quantum computing task mapping method further comprises: obtaining coherence time of all free qubits with direct connection to the first topological structure; setting a qubit with coherence time less than the first threshold to an unavailable qubit, wherein the first topological structure does not include the unavailable qubit.

Based on the same inventive concept, the present disclosure further provides a quantum computing task mapping device, comprising: a first module configured for obtaining a first qubit whose qubit parameter meets a requirement from free qubits of a target quantum chip to form a first topological structure, wherein the qubit parameter characterizes the state of a qubit, the free qubits are qubits in an idle state in the target quantum chip; a second module configured for judging whether the quantum computing task to be executed can be executed in the first topological structure; a third module configured for, if yes, mapping the quantum computing task to be executed to the first topological structure; a fourth module configured for, if not, updating the first topological structure based on the free qubits with direct connection to the first topological structure, and then returning to the step of judging whether the quantum computing task to be executed can be executed in the first topological structure.

In the eighth aspect, an embodiment of the present disclosure provides a quantum computer operating system comprising the quantum computing task mapping method as described in any one of the above feature descriptions.

In the ninth aspect, an embodiment of the present disclosure provides a quantum computer comprising the quantum computer operating system as described in any one of the above features.

In the tenth aspect, an embodiment of the present disclosure provides a readable storage medium storing a computer program therein, and the computer program can implement the executing method as described in any one of the above features when processed by a processor.

In the eleventh aspect, an embodiment of the present disclosure provides an electronic device comprising a memory and a processor, the memory stores a computer program therein, and the processor is configured for running the computer program to execute the executing method as described in any one of the above features.

In the embodiments, for a certain quantum chip in the quantum chip cluster of the system, if the quantity of the free qubits on it is not less than the quantity of qubits of the quantum computing task, the qubit topological structure that meets a requirement is selected from the free qubits of the quantum chip, and the combination is not stopped until the quantity of qubits of the obtained qubit topological structure is equal to the quantity of qubits of the quantum computing task. Finally, mapping a quantum computing task to be processed with the qubit topological structure to execute the quantum computing task to be processed. Therefore, the quantum computer operating system in the embodiment utilizes the idea of "bottom-up" to dynamically partition the free qubits of a certain quantum chip, where the quantity of the free qubits meets a requirement, in the quantum chip cluster of the system, in real time with high quality according to the actual needs of the quantum computing task to be processed, and the obtained qubit topological structure can be uniquely matched with the quantum computing task to be processed, resulting in no matching waiting time and high matching degree. This greatly improves the resource utilization of the quantum chip. In addition, this effectively improves the execution timeliness of the quantum computing task in the program waiting queue. According to an embodiment, for each quantum computing task in the program waiting queue, it is possible to quickly find the optimal partition area on free qubits of the certain quantum chip, which meets a requirement, in the quantum chip cluster of the system, so as to perform mapping.

In one embodiment, the quantum computing task priority processing module prioritizes the quantum computing tasks in the quantum computing task queue according to the depth of quantum computing task, the required quantity of the qubits and the waiting time in the quantum computing task queue, and when the resource of the quantum chip cannot meet the requirement that all tasks are executed at the same time, the utilization of qubits in the quantum chip is improved by preferentially executing the quantum computing task with high priority, therefore effectively reducing the overall waiting time for quantum computing tasks in the quantum computing task queue.

In another embodiment, since two isolated quantum computing tasks do not know each other's execution timing, to avoid crosstalk during mapping, the qubit topological structures mapped by the two quantum computing tasks are spaced far enough apart on the quantum chip as much as possible. According to the embodiment, the quantum computing task combining module may combine several quantum computing tasks into one integral quantum computing task in order of priority from high to low. Since the timing of each quantum computing task in the integral quantum computing task is known after combination, these timings may be fully utilized during the mapping, two quantum computing tasks that would otherwise need to be mapped apart may be mapped in a complete topological structure, further improving the utilization of qubits in the quantum chip.

In another embodiment, the community detection algorithm and the greedy algorithm are used in the free qubits of the quantum chip to obtain the qubit topological structure that meets a requirement, the idea of "bottom-up" is utilized to dynamically partition the free qubits of a certain quantum chip, where the quantity of the free qubits meets a requirement, in the quantum chip cluster of the system, in real time with high quality according to the actual needs of the quantum computing task to be processed, and the obtained qubit topological structure can be uniquely matched with the quantum computing task to be processed, resulting in no matching waiting time and high matching degree. This greatly improves the resource utilization of the quantum chip. In addition, this effectively improves the execution timeliness of the quantum computing task in the program waiting queue. With this method, for each quantum computing task in the program waiting queue, it is possible to quickly find the optimal partition area on free qubits of the certain quantum chip, which meets a requirement, in the quantum chip cluster of the system, so as to perform mapping.

The quantum computer operating system according to another embodiment may combine several quantum computing tasks in the quantum computing task queue into one integral quantum computing task. In this way, the layout tightness of the qubit topological structure on the quantum chip, which is obtained based on the division of the integral quantum computing task in the quantum chip, is better than the layout tightness of multiple discrete qubit topological structures on the quantum chip, which is obtained based on the independent division of several quantum computing tasks on the quantum chip, which facilitates the mapping of more quantum computing tasks in the quantum chip, thus effectively increasing the utilization of qubit resources in the quantum chip.

According to another embodiment, since the timing for all qubits in the quantum circuit corresponding to the integral quantum computing task to execute quantum logic gates is clear and unambiguous, the qubits that execute the dual-bit quantum logic gate with the same timing are spatially isolated when partitioning the qubit topological structure corresponding to the integral quantum computing task, and thus crosstalk is directly and effectively avoided when executing the integral quantum computing task after completing the mapping of the integral quantum computing task to the qubit topological structure. In addition, since the timing for all qubits in the quantum circuit corresponding to the integral quantum computing task to execute quantum logic gates is clear and unambiguous, it is possible to judge the qubit with crosstalk in the qubit topological structure according to the obtained timing of executing the quantum logic gate and calibrate it, therefore indirectly overcoming the influence of crosstalk between neighboring qubits executing the dual-bit quantum logic gate on the execution result of the integral quantum computing task.

According to another embodiment, the free qubits in the quantum chip are dynamically partitioned in real time with high quality according to the actual needs of the quantum computing task to be executed, and the obtained qubit topological structure can be matched with the quantum computing task to be executed, resulting in no matching waiting time and high matching degree. This greatly improves the resource utilization of the quantum chip. In addition, this effectively improves the execution timeliness of the quantum computing task in the program waiting queue. With the mapping method of the present disclosure, for each quantum computing task in the program waiting queue, it is possible to quickly find the optimal partition area on the free qubits of the quantum chip, which meets a requirement, in the quantum chip cluster of the system, so as to perform mapping.

**BRIEF DESCRIPTION OF THE DRAWINGS**

In order to clearly illustrate embodiments of the present disclosure or technical solutions in the prior art, accompanying drawings that need to be used in description of the embodiments or the prior art will be briefly introduced as follows. Obviously, drawings in following description are only the embodiments of the present disclosure. For those skilled in the art, other drawings can also be obtained according to the disclosed drawings without creative efforts.

FIG. 1 shows a model diagram of a quantum chip according to the related art;
FIG. 2 shows a display reference diagram of a quantum circuit diagram in an embodiment of the present application;
FIG. 3 shows a structural block diagram of a quantum computer operating system in an embodiment of the present application;
FIG. 4 shows a schematic diagram of a topology of a quantum chip in an embodiment of the present application;
FIG. 5 shows a feedback lines assignment diagram for a quantum chip in an embodiment of the present application;
FIG. 6 shows a structural block diagram of another quantum computer operating system in an embodiment of the present application;
FIG. 7 shows a schematic diagram of a workflow of an execution method for quantum computing tasks in a quantum computer in an embodiment of the present application;
FIG. 8 shows a schematic diagram of a workflow of another execution method for quantum computing tasks in a quantum computer in an embodiment of the present application;
FIG. 9 shows a structural block diagram of a quantum computer operating system provided in the present embodiment;
FIG. 10 shows a schematic diagram of overall mapping after combining quantum computing tasks P1 and P2 using the quantum computing task combining module;
FIG. 11 shows a structural block diagram of a quantum chip;
FIG. 12 shows a schematic flow diagram of a processing method for quantum computing tasks in a quantum computer provided in the present embodiment;

FIG. 13 shows a structural block diagram of a quantum computer operating system in an embodiment of the present application;

FIG. 14 shows a structural block diagram of another quantum computer operating system in an embodiment of the present application;

FIG. 15 shows a mapping partition diagram of two quantum computing tasks mapped on the same quantum chip in an embodiment of the present application;

FIG. 16 shows a structural block diagram of yet another quantum computer operating system structure in an embodiment of the present application;

FIG. 17 shows a flow diagram of a processing method for a quantum computing task in an embodiment of the present application;

FIG. 18 shows a flow diagram of a quantum computing task mapping method provided by an embodiment of the present application;

FIG. 19 shows a structural block diagram of a 2*3 quantum chip illustrated by an embodiment of the present application.

## DETAILED DESCRIPTION

The following will be described in more detail in conjunction with the schematic illustration of the specific embodiment of the present disclosure. Based on the following description and claims, the advantages and features of the present disclosure will be clearer. It should be noted that the drawings are in a very simplified form and all use imprecise proportions, which are only used to facilitate and clearly assist the purpose of the present public embodiment.

In addition, terms "first" and "second" are only for descriptive purposes, and should not be understood as indicating or implying relative importance or implying a number of indicated technical features. Therefore, features defined as "first", "second" may expressly or implicitly include at least one of those features. In the description of the present application, "plurality" means at least two, such as two, three, etc., unless expressly and specifically defined otherwise.

An embodiment of the present application provides a quantum computer operating system. The quantum computer will be first described below.

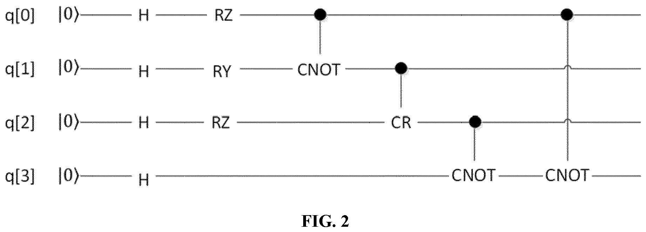

Those skilled in the art may understand that a quantum circuit can be used as an embodiment of the quantum computing task, also known as a quantum logic circuit, is the most commonly used general-purpose quantum computing model, represents a circuit that operates on qubits in an abstract concept including qubits, circuits (timelines), and various quantum logic gates, and finally needs to read out the results through quantum measurement operations. Referring to FIG. 2, FIG. 2 shows a display reference diagram of a quantum circuit diagram provided by an embodiment of the present application, wherein q[0], q[1], q[2], q[3] are qubits ranging from 0 to 3, and can often also be notated as $q_0$, $q_1$, $q_2$, $q_3$.

With the continuous development of quantum computing technology, the number of quantum computing tasks that need to be processed will increase dramatically; however, limited by the development of quantum device hardware, the physical qubit resources on quantum chips are limited. In order to ensure that all quantum computing tasks can run smoothly, it is urgent to arrange the limited quantum chips and their physical qubit resources reasonably.

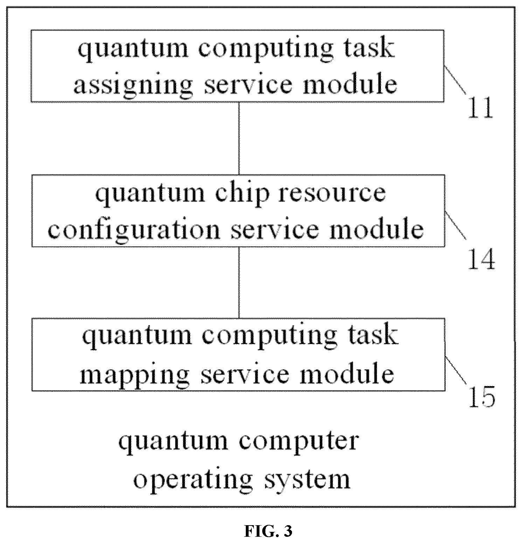

Referring to FIG. 3, FIG. 3 shows a quantum computer operating system provided by an embodiment of the present application, comprising a quantum computing task assigning service module 11, a quantum chip resource configuration service module 14, and a quantum computing task mapping service module 15.

Wherein, the quantum computing task assigning service module 11 is configured for determining a quantum computing task to be processed from currently unprocessed quantum computing tasks.

It should be noted that with the continuous development of quantum computing technology, quantum computing simulations are often required to verify quantum algorithms, quantum applications, etc., and the quantum computing tasks submitted by users received by a quantum cloud platform are processed through the quantum computer operating system. With the development of quantum computing technology, the quantum cloud platform has a multi-quantum chip cluster in the back-end, which contains N quantum chips Ci, i ∈ {1,N}. The quantity of qubits contained in each quantum chip is |Ci|, and the quantity of qubits in each quantum chip can support execution of multiple quantum computing tasks.

In addition, with the growing user interest in research in the field of quantum computing, more and more quantum applications will be submitted to the quantum cloud platform. However, due to limited coherence time and error-prone quantum logic gates of qubits of NISQ (Noisy Intermediate-Scale Quantum) devices used in the current quantum chip cluster, as more and more quantum applications are submitted by users during the use of the quantum cloud platform, there will be a quantum computing task queue.

It should be noted that in practical applications, the quantum applications submitted by users to the quantum cloud platform include multiple quantum circuits, each of which can be regarded as an independent individual when transmitted, and one quantum circuit corresponds to one quantum computing task. In this way, what are stored in the quantum computing task queue are currently unprocessed quantum computing tasks.

One quantum computing task needs to perform mapping on a quantum chip with a sufficient number of qubits. In general, the demand of the quantum computing task for the number of qubits of the quantum chip cluster is greater than the processing capacity of the quantum chip cluster, and thus a research is needed on how to schedule quantum computing tasks to ensure full utilization of the quantum chip cluster for executing tasks.

Through a unique quantum computing task scheduling priority determination mode, the present application schedules the quantum computing tasks to ensure this effect, specifically:

The value of the priority of all the currently unprocessed quantum computing tasks may be calculated based on the following ranking metrics formula:

$$R = \frac{W+1}{S} \qquad (1)$$

Wherein, R is the value of the priority, W is the queue waiting time in the quantum computing task queue after the quantum computing tasks are submitted, and S is the size of the quantum computing task, which can be expressed as $S = n * d$, wherein n is the qubit bits of the quantum computing task, and d is the depth of the quantum computing task, which characterizes the depth of the quantum circuit corresponding to the quantum computing task, and is also the length of the quantum circuit. A layer is a unit of quantum circuit depth, one layer is one (layer of) timing, one layer of quantum logic gates is quantum logic gates located within one timing that can be executed simultaneously, and the same layer of quantum logic gates is quantum logic gates in one timing that can be executed simultaneously.

In addition, through the ranking metrics formula of priority, it can be known that the following rule exists for priority: the larger R, the higher the priority of the quantum computing task corresponding to it. Thus, W is able to guarantee the quantum computing task on a first-come, first-served basis; and when the queue waiting time is similar, the smaller the S, the higher the priority of the quantum computing task, which guarantees maximum quantum resource utilization. For the quantum computing tasks with similar S, wherein the smaller the number of qubits, the higher the priority of the quantum computing task.

Therefore, in the quantum computing task queue, the quantum computing task with the highest R value is the quantum computing task with the highest priority.

The quantum chip resource configuration service module 14 is configured for obtaining a qubit topological structure that meets a requirement from free qubits of a quantum chip based on community detection algorithm and greedy algorithm, wherein the free qubits are qubits in the quantum chip that are not assigned to execute a quantum computing task.

It should be noted that the qubits and links with good quality on a specific quantum chip are limited, and some qubits have more connections with the surrounding environment. If a single-program mapping method is used in the quantum chip resource configuration service module 14 to map the quantum computing tasks to be processed one by one to the quantum chips, the mapping method will tend to select quantum chips and physical qubits with the best quality, which will lead to underutilization of quantum resources in the system, thus prolonging the queue waiting time for the quantum computing task in the quantum computing task queue. In fact, under the premise that the fidelity of the quantum computing task is greater than a certain threshold, it is possible to choose to execute the quantum computing task on a physical qubit or quantum chip that is not of the best quality. Therefore, it is necessary to find an optimal balance among improving physical qubits utilization of the quantum chip, reducing program waiting time and ensuring sufficient fidelity of the quantum computing task.

In the process of implementing the quantum computing tasks, developers mainly focus on the implementation of the quantum computing tasks, which makes the quantum circuit corresponding to the quantum computing task often contain quantum logic gates that are not supported by the quantum chip, that is, in the quantum circuit, any two logical qubits are capable of executing a dual-bit quantum logic gate, whereas in an actual quantum chip, coupling is allowed only between two neighboring physical qubits since only two neighboring physical qubits are fully connected to each other. Therefore, in actual operation, it is necessary to convert quantum logic gates that are not supported by the quantum chip into quantum logic gates that are supported by the quantum chip, so as to process the quantum circuit corresponding to the quantum computing task to obtain an executable quantum circuit.

In addition, any qubit on the quantum chip has two opposing states, one is being currently used to execute a quantum computing task or having been partitioned and mapped, and the other is being idle and available. The topology of the quantum chip reflects the spatial characteristics of the qubits on the quantum chip, including the number and location of the qubits contained in the quantum chip, and the connection relation between qubits, which determines the availability of the quantum chips.

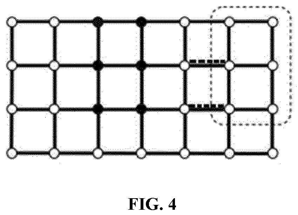

Referring to FIG. 4, FIG. 4 shows a schematic diagram of a topology of a quantum chip in an embodiment of the present application. Each white and black dot in FIG. 4 represents one qubit, wherein the white dot represents a qubit that is not occupied by the quantum computing task and the black dot represents a qubit that is being occupied by the quantum computing task, and a connecting line between two dots represents connecting relationship between the qubits. One dual-bit quantum logic gate can be executed between two qubits with a connection relation, but there will be links with a high error rate of dual-bit quantum logic gate, such as the link between two qubits represented by both solid and dashed lines in FIG. 4. If a quantum computing task that requires 6-bit qubits to perform operations is to be mapped to a partitioned region of the quantum chip with tight and reliable interconnections, the area circled by the dashed box in FIG. 4 is a suitable choice.

The qubit topological structure in an embodiment of the present application is a mappable partitioned region of the quantum computing task to be processed on the quantum chip, such as the region circled by the dashed box in FIG. 4.

The quantum computing task mapping service module 15 is configured for mapping a quantum computing task to be processed with the qubit topological structure to execute the quantum computing task to be processed.

It should be noted that said "mapping a quantum computing task to be processed with the qubit topological structure", that is, forming a mapping between the logical qubit of the quantum computing task and the physical qubit of the quantum chip, and adaptively converting the quantum logic gates before and after the mapping, therefore processing the quantum circuit corresponding to the quantum computing task so as to obtain executable quantum circuits. The execution processing of the quantum computing task to be processed is accomplished by the executable quantum circuits.

Further, the quantum chip resource configuration service module 14 comprises:

a first qubit obtaining unit configured for obtaining a first qubit that meets a preset requirement, wherein the preset requirement is that reading fidelity of the first qubit is within the preset range.

It should be noted that the reading fidelity of the qubit is the reading accuracy of the qubit. The quantum state of an evolved qubit is known after measurement and reading operations. The reading accuracy of the quantum state of the qubit is subtracting the measurement error of the qubit from 1. The reading fidelity of a qubit in a quantum chip is available in the early testing stage of the quantum chip. The reading fidelity of the first qubit is within the preset range, which can ensure the quality of the first qubit. The preset range can be set according to the accuracy requirement of the quantum computing task to be processed. For the quantum computing task with high accuracy requirement, the qubit with relatively high reading fidelity is selected. At this time, the preset range needs to limit reading fidelity to a relatively high range; for the quantum computing task with low accuracy requirement of running results, the qubit with relatively low reading fidelity can be selected, and at this time, the preset range can limit the reading fidelity to a range with a lower limit which is relatively low.

The qubit topological structure obtaining unit is configured for obtaining the qubit topological structure that meets a requirement based on the first qubit, the community detection algorithm and the greedy algorithm.

It should be noted that the community detection algorithm and the greedy algorithm are used to obtain the reward function of the qubit, and other free qubits having a value of the reward function that meets the requirement are combined with the first qubit to from the qubit topological structure.

Further, the qubit topological structure obtaining unit comprises:

a parameter obtaining subunit configured for obtaining the reading fidelity of the qubits near the first qubit, a reliability parameter for executing a dual-bit quantum logic gate operation between any two qubits which are in a direct connection relation among the qubits near the first qubit, and quantity of feedback lines, wherein the feedback lines are coupled to several qubits and are used to measure quantum state information of qubits.

A topological structure partitioning subunit is configured for partitioning a qubit whose value of reward function value meets a requirement into the qubit topological structure, wherein the reward function is obtained through the community detection algorithm and the greedy algorithm, the value of the reward function is obtained through the reading fidelity of the qubits near the first qubit, the reliability parameter for executing a dual-bit quantum logic gate operation between any two qubits which are in a direct connection relation among the qubits near the first qubit, and the quantity of feedback lines.

It should be noted that the qubits on the quantum chip required to execute a single quantum computing task should be tightly assigned. The qubits near the first qubit refer to the free qubits that are in direct or indirect connection relation with the first qubit, wherein the reliability parameter for executing a dual-bit quantum logic gate operation between any two qubits which are in a direct connection relation specifically refers to reliability of the dual-bit quantum logic gate, that is, refers to reliability of the link between two qubits that are in a direct connection relation. The reliability of the dual-bit quantum logic gate is calculated by subtracting the operation error rate of two qubits implementing the dual-bit quantum logic gate from 1, wherein the operation error rate of the qubit is a known parameter, and similar to reading fidelity, the reliability of the dual-bit quantum logic gate has been obtained in the early testing stage of the quantum chip. In addition, since the probability of errors in single-bit quantum logic gates is very low in practical applications, the reliability of single-bit quantum logic gates is generally set to 1. Only the reliability of the dual-bit quantum logic gate is taken into consideration when calculating the value of the reward function.

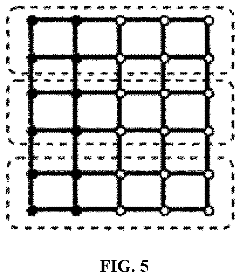

Referring to FIG. 5, FIG. 5 shows a feedback lines assignment diagram for a quantum chip in an embodiment of the present application. In this figure, all qubits in the same dashed rectangle are coupled to the same feedback line. Since the measurement of qubits requires several steps to be performed sequentially, the measurement of a qubit will not be able to start while another qubit coupled to the same feedback line is being measured, but combination of any qubits coupled to the same feedback line can be measured simultaneously at a given time. Therefore, if two quantum computing tasks share the same feedback line and have different depths, their measurements must be synchronized or not overlap in time. This leads to the need to delay the start of short quantum computing tasks when measurements overlap. In practice, by making one quantum computing task fill up one feedback line as much as possible, the possibility of too many quantum computing tasks sharing the same feedback line can be reduced, which thus can effectively avoid the execution inefficiency of the quantum computing tasks.

The reward function is obtained through the community detection algorithm and the greedy algorithm, and since the value of the reward function is obtained through the reading fidelity of the qubits near the first qubit, the reliability parameter for executing a dual-bit quantum logic gate operation between any two qubits which are in a direct connection relation among the qubits near the first qubit, and the quantity of feedback lines, a qubit whose the reading fidelity of the qubits near the first qubit, a reliability parameter for executing a dual-bit quantum logic gate operation between any two qubits which are in a direct connection relation among the qubits near the first qubit, and quantity of feedback lines are all within the preset range can be set as the qubit topological structure. Those skilled in the art can understand that whether the value of the reward function meets the requirements can be determined according to the quality requirements of the qubit topological structure, which is not limited herein.

Further, the quantum chip resource configuration service module 14 further comprises:

a quantity judging unit configured for judging whether quantity of qubits in the qubit topological structure is greater than or equal to quantity of qubits required by the quantum computing task to be processed;
a processing unit configured for when the judgment result is yes, outputting a first instruction to the quantum computing task mapping service module such that the qubit topological structure is used for executing the quantum computing task to be processed; when the judgment result is no, outputting a second instruction to the topological structure partitioning subunit such that the topological structure partitioning subunit continues partitioning other qubits that meet a requirement into the qubit topological structure.

It should be noted that when mapping the quantum computing task to be processed to the qubit topological structure, it must be ensured that the number of qubits in the qubit topological structure is not less than the number of qubits in the quantum computing task to be processed. Therefore, when partitioning the qubit topological structure in the free qubits of the quantum chip, it is necessary to determine in real time whether the number of qubits combined into the qubit topological structure has reached the number of logical qubits of the quantum computing task to be processed on the basis of the number of qubits of the quantum computing task to be processed. In addition, other qubits that meet a requirement refer to qubits whose reward function meets a requirement.

Further, the reward function is:

$$F = Q_m - Q_o + \omega EV + \beta \frac{1}{L}$$

Wherein, F is a value of the reward function, $Q_m$ is tightness of the qubit topological structure after adding one of the other qubits, and Qo is tightness of the qubit topological structure before adding one of the other qubits. E is an average fidelity for executing a dual-bit quantum logic gate operation between any two qubits in the qubit topological structure which are in a direct connection relation after adding one of the other qubits, and fidelity for executing a dual-bit quantum logic gate operation between two qubits which are in a direct connection relation is the reliability of the link between two qubits that are in a direct connection relation. V is an average reading fidelity of all qubits in the qubit topological structure after adding one of the other qubits. $\omega$, $\beta$ are preconfigured weight coefficients, and are empirical constants. L is a total quantity of feedback lines in the qubit topological structure after adding one of the other qubits.

Those skilled in the art can understand that for a particular quantum chip cluster, suitable $\omega$, $\beta$ can be used to adjust the physical topology of the qubit topological structure, the operational error rate of the dual-bit quantum logic gate, and the weighting of the feedback lines structure in a certain quantum chip so as to maximize the value of the reward function. Exemplarily, if the third term of the formula for the reward function is large, it indicates that the resulting community structure after combination will cover some feedback lines, which need to be filled as much as possible.

It should be noted that the reward function is obtained by using the community detection algorithm and the greedy algorithm, wherein the community detection algorithm is used to detect the community structure in the network structure, and belongs to a clustering algorithm. The partitioned community structure is a subgraph, including vertices and edges. The vertices in the same community are closely connected, while the connections between communities are relatively sparse. The modularity is selected as a measurement index for evaluating whether the division of a community structure is good or not, the modularity is obtained by subtracting the total degree of the vertices in the community structure from the degree of the edges in the community structure, and its calculation formula is:

$$Q = \sum_{c \in C} \left( \frac{Ic}{m} - \left( \frac{Dc}{2m} \right)^2 \right)$$

Wherein, Q is modularity of a community structure C, the higher the value of the modularity Q is, the more appropriate the division of the community structure C is; m is the total number of edges of the community structure C; Ic is the number of all edges in the community structure C; and Dc is the sum of the degrees of all vertices in the community structure C.

The quantum computing task creates entanglement by using the dual-bit quantum logic gate, and the dual-bit quantum logic gate can only be performed between two physical qubits coupled on the quantum chip. Therefore, the qubits on the quantum chip required to execute a single quantum computing task should be closely assigned, and crosstalk and other mutual interference between different quantum computing tasks should be avoided. The qubit topological structure is equivalent to the community structure where free physical qubits on the quantum chip aggregate. Thus, the tightness $Q_m$ and $Q_o$ of the qubit topological structure can be obtained by using the calculation formula of modularity Q of the community detection algorithm, wherein each qubit in the grid structure of the quantum chip is equivalent to the vertex of the community structure, and the link between the two qubits is equivalent to the edge of the community structure.

The idea of the greedy algorithm is to take the first qubit of the quantum chip as the community structure, and continuously combine the free qubits near the first qubit with the community structure to form a new community structure, so that the value of the reward function is maximized until a final community structure containing the number of qubits required by the quantum computing task is obtained. The final community structure is the qubit topological structure.

Further, the coherence time of each qubit in the quantum chip is limited and different, wherein the larger the coherence time is, the better the reliability of the qubit is. If there is a qubit with short coherence time in the qubit topological structure where one quantum computing task is located, the fidelity of the quantum computing task will be greatly affected. Decoherence error of a qubit increases exponentially with respect to the length of the quantum computing task. Therefore, the quantum computing task should be executed on a qubit whose coherence time is longer than its own execution time, and before obtaining the qubit topological structure, a qubits whose coherence time is too short relative to the execution time of the quantum computing task needs to be excluded when partitioning the available qubits.

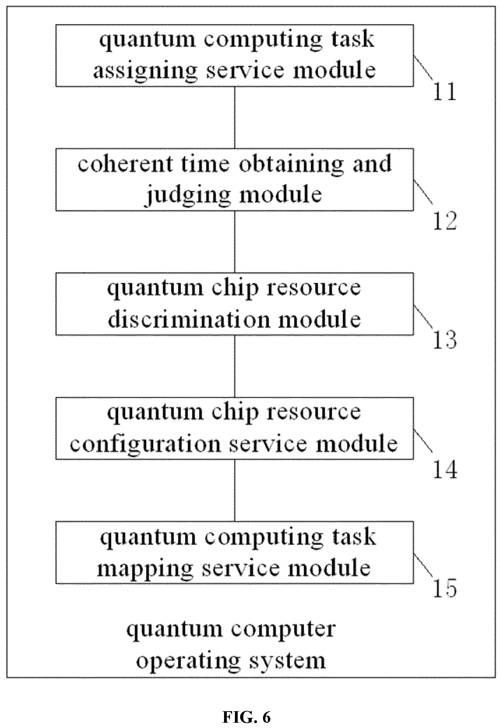

Therefore, referring to FIG. 6, another quantum computer operating system according to an embodiment of the present application is shown. On the basis of the structure of the previous embodiment, the quantum computer operating system further comprises:

> a coherent time obtaining and judging module 12, configured for obtaining coherence time of the free qubits in the quantum chip and judging whether coherent time of every free qubit is greater than a first threshold, wherein the first threshold is determined according to execution time of the quantum computing task to be processed.

a quantum chip resource discrimination module 13, configured for when the judgment result is no, setting a corresponding qubit as an unavailable qubit, wherein the quantum chip resource configuration service module 14 will not partition the unavailable qubit into the qubit topological structure.

The quantum computer operating system is a tool used in the quantum computer to connect a user terminal and a quantum chip being a core component of the quantum computer. The quantum computer operating system receives quantum computing tasks sent from the user terminal on the one hand, and on the other hand, needs to map these quantum computing tasks to a specific qubit topological structure in the quantum chip so as to complete the execution of these quantum computing tasks. However, since the NISQ device used in the existing quantum chip cluster cannot realize the complete connection between any two qubits while the quantum computing task usually needs to execute one dual-bit quantum logic gate between any two qubits, it is very important to find an optimized mapping region (i.e., the qubit topology) for the quantum computing task in a quantum chip meeting a requirement from a quantum chip cluster. The quantum chip resource configuration service module 14 in the quantum computer operating system provided by the embodiment of the present application may find a mapped region with tightly connected qubits and low connection error rates for each quantum computing task, and by using a solution based on the community detection algorithm and the greedy algorithm taking into account the fidelity requirements for program execution, the avoidance of crosstalk, and the rational use of feedback lines, may find the optimal qubit topological structure as the mapping region for the quantum computing task, which provides a reliable solution for efficient and fast execution of the quantum computing tasks.

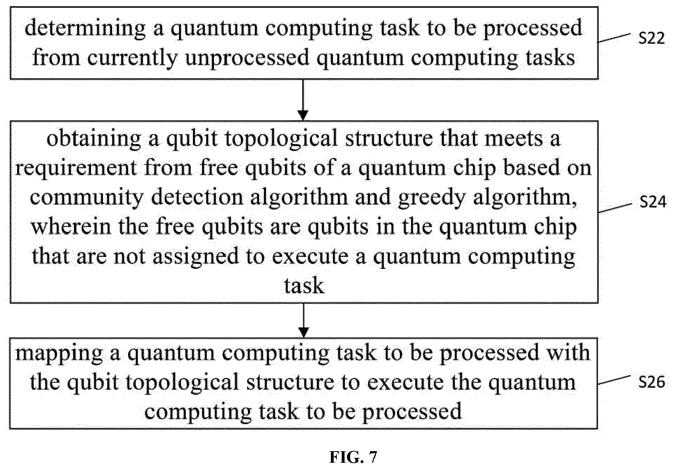

Based on the same invention, an embodiment of the present application proposes an execution method for quantum computing tasks in a quantum computer. See FIG. 7, the method comprises the following steps:

> Step S22: determining a quantum computing task to be processed from currently unprocessed quantum computing tasks;
> Step S24: obtaining a qubit topological structure that meets a requirement from free qubits of a quantum chip based on community detection algorithm and greedy algorithm, wherein the free qubits are qubits in the quantum chip that are not assigned to execute a quantum computing task;
> Step S26: mapping a quantum computing task to be processed with the qubit topological structure to execute the quantum computing task to be processed.

For details, please refer to the description of the above embodiment, which will not be repeated herein.

It should be noted that said "obtaining a qubit topological structure that meets a requirement from free qubits of a quantum chip based on community detection algorithm and greedy algorithm" in Step S24, comprises:

obtaining a first qubit that meets a preset requirement, wherein the preset requirement is that reading fidelity of the first qubit is within the preset range;
obtaining the qubit topological structure that meets a requirement based on the first qubit, the community detection algorithm and the greedy algorithm.

It should be noted that said "obtaining the qubit topological structure that meets a requirement based on the first qubit, the community detection algorithm and the greedy algorithm", specifically comprises: obtaining the reading fidelity of the qubits near the first qubit, a reliability parameter for executing a dual-bit quantum logic gate operation between any two qubits which are in a direct connection relation among the qubits near the first qubit, and quantity of feedback lines; partitioning a qubit whose value of reward function value meets a requirement into the qubit topological structure, wherein the reward function is obtained through the community detection algorithm and the greedy algorithm, the value of the reward function is obtained through the reading fidelity of the qubits near the first qubit, the reliability parameter for executing a dual-bit quantum logic gate operation between any two qubits which are in a direct connection relation among the qubits near the first qubit, and the quantity of feedback lines.

For details, please refer to the description of the above embodiment, which will not be repeated herein.

Wherein, the description of the reward function is as above, which will not be repeated herein.

It should be noted that said "obtaining a qubit topological structure that meets a requirement from free qubits of a quantum chip based on community detection algorithm and greedy algorithm" in Step S24, further comprises:

judging whether quantity of qubits in the qubit topological structure is greater than or equal to quantity of qubits required by the quantum computing task to be processed; if yes, outputting a first instruction to the quantum computing task mapping service module 12 such that the qubit topological structure is used for executing the quantum computing task to be processed. If not, outputting a second instruction to the topological structure partitioning subunit such that the topological structure partitioning subunit continues partitioning other qubits that meet a requirement into the qubit topological structure.

In addition, each quantum computing task needs to be executed in the coherent time of the qubits, otherwise it will produce a large error in the execution result of the quantum computing task. Therefore, before configuring quantum chip resources for a certain quantum computing task, it is necessary to find out the unavailable qubits for the quantum computing task, and exclude the unavailable qubits from the qubit topological structure that needs to be partitioned.

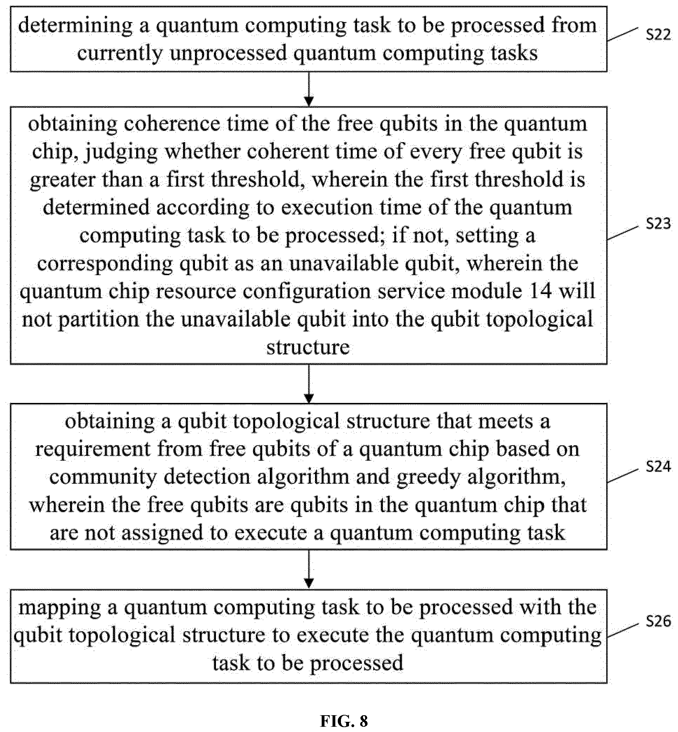

Therefore, referring to FIG. 8, an embodiment of the present application proposes another execution method for quantum computing tasks in a quantum computer. On the basis of the previous embodiment, the execution method further needs to comprise:

Step S23: obtaining coherence time of the free qubits in the quantum chip;
judging whether coherent time of every free qubit is greater than a first threshold, wherein the first threshold is determined according to execution time of the quantum computing task to be processed;
if not, setting a corresponding qubit as an unavailable qubit, wherein the quantum chip resource configuration service module 14 will not partition the unavailable qubit into the qubit topological structure.

It should be understood that the number of each step in the above embodiments does not mean the order of execution, and the execution order of each process should be determined by its function and internal logic, and should not constitute any limitation to the implementation process of the embodiments of the present application.

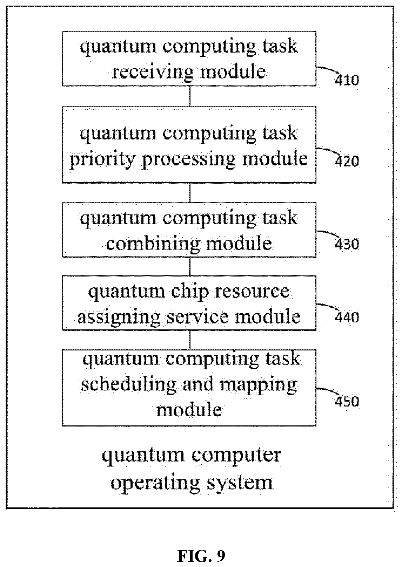

Referring to FIG. 9, an embodiment of the present application proposes a quantum computer operating system comprising a quantum computing task receiving module 410, a quantum computing task priority processing module 420, a quantum computing task combining module 430, a quantum chip resource assigning service module 440, and a quantum computing task scheduling and mapping module 450.

The quantum computing task receiving module 410 is configured for receiving a quantum computing task queue, wherein the quantum computing task queue comprises a plurality of quantum computing tasks.

Those skilled in the art can understand that the quantum computing task is uploaded by the user in real time. In the present embodiment, the method of uploading the quantum computing task may be that the user submits the corresponding task on the quantum cloud platform, and during the use of the quantum cloud platform, there will be a quantum computing task queue as the number of quantum computing tasks submitted by the user continues to increase. In general, the demand of the quantum computing task for the number of qubits of the quantum chip cluster is greater than the processing capacity of the quantum chip cluster, and thus a research is needed on how to schedule quantum computing tasks to ensure full utilization of the quantum chip cluster for executing tasks.

The application schedules the quantum computing task through a unique quantum computing task scheduling priority determination mode to ensure the effect. In order to achieve the effect, the quantum computing task priority processing module 420 of the present application is configured for obtaining a priority of each quantum computing task in the quantum computing task queue based on depth of the quantum computing task, a required quantity of qubits, and the waiting time in the quantum computing task queue, wherein the quantum computing task with the highest priority is executed first.

Specifically, the values of the priorities of all the currently unprocessed quantum computing tasks may be calculated based on the following ranking metrics formula, such as the above formula (1).

With the above quantum computing task scheduling priority, not only the waiting time of the quantum computing task is considered, but also the size of the quantum computing task based on the number of qubits and the depth of the quantum computing task. The consideration of the number of qubits and the depth of the quantum computing task ensures the full utilization of the quantum chip cluster, thereby improving the execution efficiency of the quantum computing task queue.

It should be understood that a layer is a unit of quantum circuit depth, one layer is one (layer of) timing, one layer of quantum logic gates is quantum logic gates located within one timing that can be executed simultaneously, and the same layer of quantum logic gates is quantum logic gates in one timing that can be executed simultaneously.

In addition, through the ranking metrics formula of priority, it can be known that the following rule exists for priority: the larger R, the higher the priority of the quantum computing task corresponding to it. Thus, W is able to guarantee the quantum computing task on a first-come, first-served basis; and when the queue waiting time is similar, the smaller the S, the higher the priority of the quantum computing task, which guarantees maximum quantum resource utilization. For the quantum computing tasks with similar S, wherein the smaller the number of qubits, the higher the priority of the quantum computing task. Therefore, in the quantum computing task queue, the quantum computing task with the highest R value is the quantum computing task with the highest priority.

According to the above priority rule, the first task and the second task are two quantum computing tasks with the highest priority in the quantum computing task queue. Similarly, the quantum chip resource assigning service module 440 can sequentially schedule short tasks in a descending order of priority. The quantum computing task priority processing module 420 prioritizes the quantum computing tasks in the quantum computing task queue according to the depth of the quantum computing task, the required quantity of the qubits, and the waiting time in the quantum computing task queue, and when the resource of the quantum chip cannot meet the requirement that all tasks are executed at the same time, the utilization of qubits in the quantum chip is improved by preferentially executing the quantum computing task with high priority, therefore effectively reducing the overall waiting time for quantum computing tasks in the quantum computing task queue.

The quantum computing task priority processing module 420 comprises a quantum computing task state obtaining unit and a quantum computing task priority obtaining unit. The quantum computing task state obtaining unit is configured for obtaining the depth of each quantum computing task in the quantum computing task queue, a required quantity of qubits and the waiting time in the quantum computing task queue. The quantum computing task priority obtaining unit is configured for obtaining the priority of each quantum computing task, wherein the priority of each quantum computing task is R, $R=(W+1)/(n*d)$, W is the waiting time in the quantum computing task queue for the quantum computing task, n is the quantity of the qubits required for the quantum computing task, and d is the depth of the quantum computing task.

The inventor also found in practical applications that when dual-bit quantum logic gates are required in two quantum computing tasks, crosstalk will inevitably occur when the two quantum computing tasks are mapped in two qubit topological structures that are relatively close, resulting in a dramatic increase in the error rate of dual-bit quantum logic gates. In order to avoid crosstalk, the quantum computer operating system in the prior art maps two quantum computing task, and when the dual-bit quantum logic gate is required in the two quantum computing tasks, the qubit topological structures mapped by these two quantum computing tasks are spaced far enough apart on the quantum chip as much as possible to minimize influence of crosstalk. This scheme in the prior art greatly limits the utilization rate of qubits in quantum chips, resulting in a waste of quantum chip resources.

In order to solve the above problem, the quantum computer operating system of the present disclosure is provided with the quantum computing task combining module 430, which is configured for combining several quantum computing tasks in the quantum computing task queue into one integral quantum computing task in order of priority from high to low, and updating the quantum computing task queue. Those skilled in the art should understand that in order to facilitate the understanding of the technical solution of the present disclosure, in the present embodiment, two quantum computing tasks are combined as an example, and the combination of other larger number of quantum computing tasks can be derived from the combining process of the two quantum computing tasks.

Since two isolated quantum computing tasks do not know the execution timing of each other, in order to avoid crosstalk in the mapping process, the qubit topological structures mapped by these two quantum computing tasks are spaced far enough apart on the quantum chip. The quantum computing task combining module 430 of the present application may combine several quantum computing tasks into one integral quantum computing task in order of priority from high to low. Since the timings of the respective quantum computing tasks in the integral quantum computing task are known after the combination, these timings can be fully utilized in the mapping process, and thus two quantum computing tasks that originally need to be mapped separately can be mapped with a complete topology, which further improves the utilization of qubits in quantum chips.

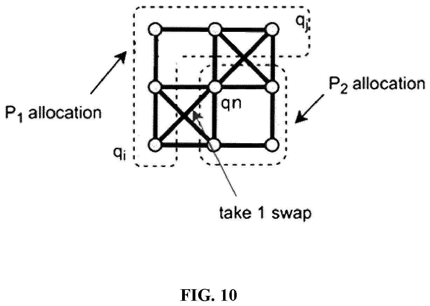

In addition, when the two quantum computing tasks are mapped to the quantum chip independently, the number of SWAP gate operations between qubits in the quantum chip will increase significantly. Referring to FIG. 10, FIG. 10 shows a schematic diagram of overall mapping after combining quantum computing tasks P1 and P2 using the quantum computing task combining module 430. P1 allocation in FIG. 10 represent the mapping partition of one quantum computing task P1, P2 allocation represents the mapping partition of another quantum computing task P2 adjacent to the mapping partition of the quantum computing task P1, and the two mapping partitions are respectively assigned in the two dotted boxes. qi and qj are the qubits in the executable quantum circuit corresponding to the P1 quantum computing task that need to be executed immediately, and they are both in the mapped but not executed state.

In the mapping partition of quantum computing task P1, there are three other qubits with a connection relation between qi and qj. The SWAP gate-by-gate conversion operation needs to be performed with the help of these three qubits as routings during the execution of qi and qj, thus three routings are required for the execution of qi and qj. However, the fidelity of quantum computing task P1 is reduced to some extent due to the fact that the gate operation of any two qubits which are in a direct connection relation has an error, that is, the error of the gate operation between qi and qj executed through the three routings accumulates and increases. By observing the topological structure of the quantum chip in FIG. 10, it can be seen that there is a qubit qn in the mapping partition of the quantum computing task P2, which is in a connection relation with the qubits qi and qj, respectively. If the quantum computing task P1 and the quantum computing task P2 are combined, there may be a shortcut when the qubits qi and qj perform the dual-bit quantum logic gate. After the quantum computing task P1 and the quantum computing task P2 are combined, all qubits of the quantum computing task P1 and the quantum computing task P2 will share the combined mapping partition. At the moment, the qubits qi and qj will choose to perform a dual-bit quantum logic gate through a swapping path that is shorter than the swapping path inside the mapping region of the quantum computing task P1, i.e., the qubits qi and qj will select the qubit qn that exists in the mapping region of the quantum computing task P2 and is directly connected to both of the qubits qi and qj to perform the SWAP gate operation, and thus the operation of the dual-bit quantum logic gate between the qubits qi and qj is realized by a single routing and a single SWAP gate operation. In this way, it is possible to effectively reduce the error of gate operation and improve the fidelity of quantum computing task to some extent.

Through the above analysis, it can be seen that the overall mapping is not performed until the two quantum computing tasks are combined by using the quantum computing task combining module 430 of the present disclosure, which helps to reduce the overhead of the SWAP gate and can also take advantage of the powerful qubits and the links on the quantum chip, therefore reducing the overhead of SWAP gates during mapping, reducing interference between multiple concurrent quantum computing tasks, and improving overall fidelity.

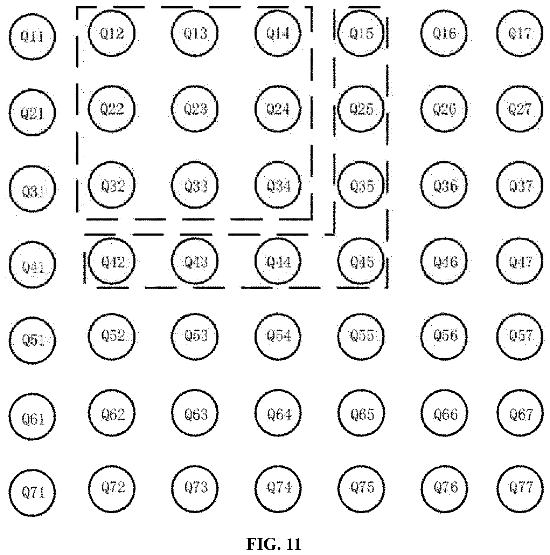

Further, since the qubits of the quantum chip are fragile and highly susceptible to noise interference, when the dual-bit quantum logic gate is required in the two quantum computing tasks, crosstalk will occur inevitably if the two quantum computing tasks are mapped with two qubit topological structures which are relatively close to each other, which will also lead to a sharp increase in the operation error of the dual-bit quantum logic gate, thus seriously affecting the fidelity of the quantum computing task to some extent. And in the optimal mapping partition of two quantum computing tasks, some qubits affected by crosstalk will have to be idle, which also causes the waste of qubit resources to some extent, and reduces the utilization rate of qubit resources. After combining by using the quantum computing task combining module 430 in the present application, the timings of Individual quantum computing tasks in the integral quantum computing task are known, and the timings can be utilized in the mapping process to effectively avoid the crosstalk. Please refer to FIG. 11, FIG. 11 is a schematic diagram of a quantum chip. Assuming that there are quantum computing tasks, which are a first quantum computing task and a second quantum computing task respectively, wherein, the first quantum computing task requires 9 qubits, and the second quantum computing task requires 7 qubits. After combined by the quantum computing task combining module 430 and mapped to the quantum chip in FIG. 11, wherein, the mapping regions of the first quantum computing task are $Q_{12}$, $Q_{13}$, $Q_{14}$, $Q_{22}$, $Q_{23}$, $Q_{24}$, $Q_{32}$, $Q_{33}$, and $Q_{34}$, and the mapping regions of the second quantum computing task are $Q_{15}$, $Q_{25}$, $Q_{35}$, $Q_{42}$, $Q_{43}$, $Q_{44}$, and $Q_{45}$. If the dual-bit quantum logic gate needs to be executed at a certain time both in the execution timing of the first quantum computing task and that of the second quantum computing task, the four bits used to perform this dual-quantum logic gate are spaced apart in the respective mapping regions at the time of mapping. For example, it may be considered to select $Q_{12}$ and $Q_{13}$ in the execution region of the first quantum computing task to execute the dual-bit quantum logic gate, and to select $Q_{44}$ and $Q_{45}$ in the execution region of the second quantum computing task to execute the dual-bit quantum logic gate. In this way, it is possible to effectively avoid crosstalk at the time of mapping. It should be noted that the above chip structure and the division of the execution regions of the quantum computing task are merely examples for the purpose of facilitating the understanding of the scheme of the present disclosure, and cannot be regarded as any limitation on the present disclosure. It should be understood by those skilled in the art that what is intended to be expressed in the above examples is such a scheme of how to effectively avoid crosstalk from occurring. There are many other examples, which will not be repeated herein.

After the quantum computer operating system combines several quantum computing tasks into the integral quantum computing task, it is necessary to assign the corresponding topological structure in the quantum chip according to the quantity of qubits required by the integral quantum computing task. In the prior art, the quantum computer operating system generally first partitions all qubits on the quantum chip into several executable quantum circuit blocks (i.e., qubit topological structure) according to a multi-layer division processing method, then available executable quantum line blocks are then selected from them to perform the mapping according to the number of qubits in the quantum computing tasks to be run, wherein the number of qubits in the available executable quantum circuit blocks is the same as the number of qubits in the quantum programs to be run. However, with the increasing demand for quantum computing in the quantum computer operating system, the number of quantum computing tasks that need to be processed will increase constantly, and the quantity of qubits required by individual quantum computing tasks varies widely. Mapping the quantum computing task to be run by using the executable quantum circuit blocks suffers from problems such as the low resource utilization of the qubits of the quantum chip, the long waiting time for running the quantum computing task, and the low timeliness of running the program caused by unreasonable division of the executable quantum circuit blocks, and a long time for finding executable quantum circuit blocks that match the quantum computing tasks to be run, resulting in poor user experience.

For solving this problem, the quantum chip resource assigning service module 440 in the quantum computer operating system proposed in the present embodiment is configured for obtaining a qubit topological structure that meets a requirement from the free qubits of the quantum chip by using the community detection algorithm and the greedy algorithm based on the updated quantum computing task queue; wherein the free qubits are qubits in the quantum chip that are not assigned a quantum computing task.

Said "meets a requirement" comprises: the quantity of qubits in the qubit topological structure is equal to the quantity of qubits required by the quantum computation task currently to be executed, and the tightness of the qubit topological structure, the reading fidelity of all qubits in the qubit topological structure, the reliability parameters for executing the dual-bit quantum logic gate in the qubit topological structure, and the quantity of feedback lines in the qubit topological structure all meet preset thresholds. The principle and implementation of obtaining a qubit topological structure that meets a requirement from free qubits of a quantum chip with the community detection algorithm and the greedy algorithm are described above and will not be repeated herein.

Further, since the coherence time of each qubit in a quantum chip is finite and different, the greater the coherence time, the better the reliability of the qubit. If there are qubits with a short coherence time in the qubit topological structure in which one quantum computing task is located, then the fidelity of the quantum computing task will be greatly affected. The decoherence error of the qubit increases exponentially relative to the length of the quantum program. Therefore, the quantum computing task should be executed on qubits whose coherence time is longer than its own execution time, and before obtaining the qubit topological structure, qubits whose coherence time is too short relative to the execution time of the quantum computing task need to be excluded from partitioning the available qubits.

Specifically, the quantum computer operating system further comprises a coherent time obtaining and judging module and a quantum chip resource discrimination module, the coherent time obtaining and judging module configured for obtaining the coherence time of the free qubits in the quantum chip, and judging whether the coherence time of each of the free qubits is greater than the first threshold, wherein, the first threshold is determined according to the execution time of the quantum computing task currently to be processed. The quantum chip resource discrimination module is configured for when the judgment result is no, setting a corresponding qubit as an unavailable qubit, wherein the quantum chip resource configuration service module 440 will not partition the unavailable qubit into the qubit topological structure.

After finding the qubit topological structure, the quantum computing task scheduling and mapping modules schedules a quantum computing task to be executed based on the updated quantum computing task queue, and maps the quantum computing task to be executed to the qubit topological structure in order of priority from high to low. At this point, the quantum computer operating system completes the process of the quantum computing task, and then executes the corresponding quantum computing task in the quantum chip.

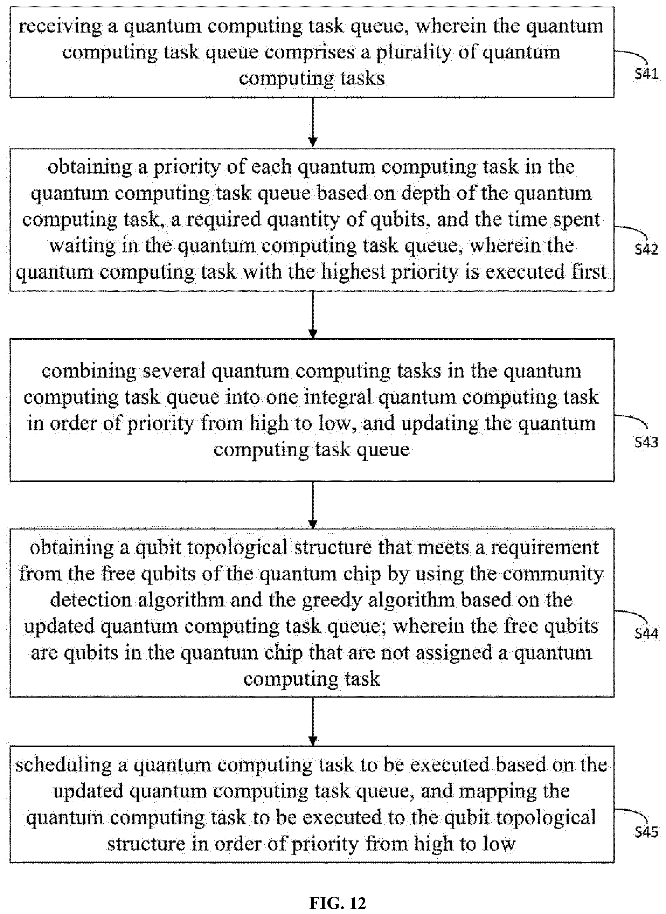

Please refer to FIG. 12, based on the same inventive concept, the present embodiment also proposes a processing method for quantum computing tasks in a quantum computer, which comprises:

S41: receiving a quantum computing task queue, wherein the quantum computing task queue comprises a plurality of quantum computing tasks;
S42: obtaining a priority of each quantum computing task in the quantum computing task queue based on depth of the quantum computing task, a required quantity of qubits, and the time spent waiting in the quantum computing task queue, wherein the quantum computing task with the highest priority is executed first;

S43: combining several quantum computing tasks in the quantum computing task queue into one integral quantum computing task in order of priority from high to low, and updating the quantum computing task queue;

S44: obtaining a qubit topological structure that meets a requirement from the free qubits of the quantum chip by using the community detection algorithm and the greedy algorithm based on the updated quantum computing task queue; wherein the free qubits are qubits in the quantum chip that are not assigned a quantum computing task;

S45: scheduling a quantum computing task to be executed based on the updated quantum computing task queue, and mapping the quantum computing task to be executed to the qubit topological structure in order of priority from high to low.

Optionally, the processing method further comprises:

obtaining the coherence time of the free qubits in the quantum chip, and judging whether the coherence time of each of the free qubits is greater than the first threshold, wherein, the first threshold is determined according to the execution time of the quantum computing task currently to be processed;

when the judgment result is no, setting a corresponding qubit as an unavailable qubit, and the quantum chip resource configuration service module will not partition the unavailable qubit into the qubit topological structure

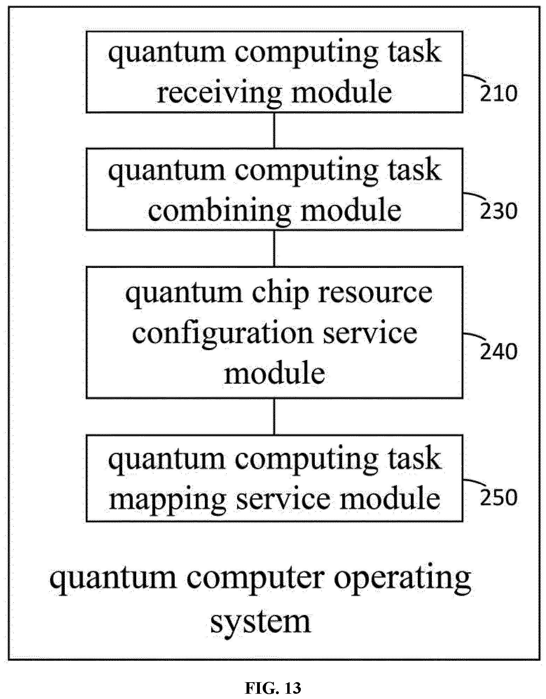

See FIG. 13, FIG. 13 shows a quantum computer operating system provided by an embodiment of the present application, which comprises:

a quantum computing task receiving module 210 configured for receiving a quantum computing task queue, wherein the quantum computing task queue comprises a plurality of quantum computing tasks;

a quantum computing task combining module 230 configured for combining several quantum computing tasks in the quantum computing task queue into one integral quantum computing task;

a quantum chip resource configuration service module 240 configured for obtaining a qubit topological structure from a quantum chip based on the integral quantum computing task;

a quantum computing task mapping service module 250 configured for mapping the integral quantum computing task with the qubit topological structure to execute the integral quantum computing task.

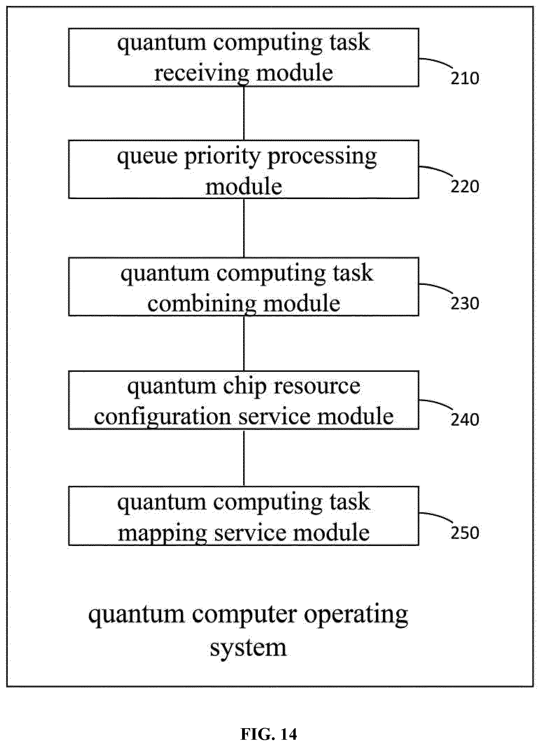

See FIG. 14, FIG. 14 shows another quantum computer operating system provided by an embodiment of the present application. On the basis of the previous embodiment, the quantum computer operating system further comprises:

a queue priority processing module 220 configured for setting a priority of each quantum computing task in the quantum computing task queue based on depth of the quantum computing task, a required quantity of qubits, and the time spent waiting in the quantum computing task queue, wherein the quantum computing task with the highest priority is executed first.

It should be noted that the present application schedules quantum computing tasks through a unique quantum computing task scheduling priority determination mode to ensure this effect, which is specifically that: In the present embodiment, the priorities of all the quantum computing tasks can be calculated based on the above formula (1), which is not described herein.

Therefore, the quantum computing task combining module 230 may combine several quantum computing tasks into one integral quantum computing task in order of priority from high to low. Since the timings of the respective quantum computing tasks in the integral quantum computing task are known after the combination, these timings can be fully utilized in the mapping process, and thus two quantum computing tasks that originally need to be mapped separately can be mapped with a complete topology, which further improves the utilization of qubits in quantum chips.

It should be noted that since the qubits of the quantum chip are fragile and highly susceptible to noise interference, such as unnecessary interaction between qubits, and crosstalk noise such as control signal leakage onto qubits that are not part of the intended quantum logic gate operation. When a dual-bit quantum logic gate or multi-bit quantum logic gate is executed simultaneously between adjacent qubits, the quantum states of each other are destroyed, resulting in errors in the quantum logic gates. The current dual-bit quantum logic gate on superconducting quantum chips has an error of 1-2%, which is further exacerbated by an order of magnitude when subjected to crosstalk noise.

For reducing the influence of crosstalk noise, in the prior art, when the dual-bit quantum logic gate is required in the two quantum computing tasks, the qubit topological structures mapped by these two quantum computing tasks are spaced far enough apart on the quantum chip as much as possible to minimize influence of crosstalk, which cannot promote the sharing of qubits by different quantum computing tasks, in turn greatly reduces the resource utilization of the limited quantum chips in the quantum chip cluster and the qubits on them, prolongs the waiting time of executing quantum computing tasks to some extent, and also reduces the timeliness of executing quantum computing tasks.

In the present embodiment, the quantum computing task combining module 230 is configured for combining several quantum computing tasks in the quantum computing task queue into one integral quantum computing task. Wherein, the several quantum computing tasks are quantum computing tasks in the quantum computing task queue in order of priority from high to low. When combing the plurality of the quantum computing tasks into one integral quantum computing task, the quantum chip resource configuration service module 240 is configured for partitioning the qubit topological structure to be mapped in the quantum chip based on the integral quantum computing task. In this way, the compactness of the layout on the quantum chip of the qubit topological structures which are obtained by partitioning in the quantum chip based on the integral quantum computing task is better than the compactness of the layout on the quantum chip of a plurality of discrete qubit topological structure which are independently partitioned on the quantum chip based on the several quantum computing tasks, which can effectively improve the compactness of the layout on the quantum chip of the qubit topological structures, and thus facilitates the mapping of more quantum computing tasks on one quantum chip, thereby improving the resource utilization of the qubits in the quantum chip to some extent. It should be noted that the resource utilization of the qubits in the quantum chip refers to the ratio of the number of occupied qubits to the number of all qubits on the quantum chip.

In addition, the inventors found that for quantum computing tasks that can be combined, after combining these quantum computing tasks into one integral quantum computing task, the execution timing of the quantum logic gates in the quantum lines corresponding to the integral quantum computing task is clear and explicit. Based on the above findings, the applicant considers that if there are dual-bit quantum logic gates with staggered timings for one or more qubits in the integral quantum computing task, then when partitioning the qubit topological structure for mapping on the quantum chip based on the integral quantum computing task, one can consider the case of time-sharing multiplexing of qubits. The number of qubits in the resulting qubit topological structure thus partitioned will be less than the sum of the number of qubits in these quantum computing tasks, which effectively reduces the layout range of the qubit topological structure in the quantum chip, and improves the compactness of the structure division. At the same time, this enables the remaining quantity of the free qubits to increase, and thus facilitates the mapping of more quantum computing tasks in a single quantum chip, thereby increasing the resource utilization of the ordered qubits in the quantum chip.

It should be noted that the time-sharing multiplexing of qubits refers that according to the timing of the quantum logic gate in the integral quantum computing task after two or more quantum computing tasks are combined, one or more qubits present in the qubit topological structure performing the mapping are used to perform different quantum computing tasks at different times.

Therefore, the topological structure obtained from the quantum chip based on the integral quantum computing task comprises multiplexing qubits, wherein the multiplexing qubits is used to execute different quantum computing tasks separately at different moments. Those skilled in the art can understand that the number of the multiplexing qubits can be determined according to the actual situation, and can be one, two or more, and needs to be determined according to the timing of the quantum computing task, which is not limited herein.

Further, the quantum chip resource configuration service module 240 comprises:

multiplexing bits obtaining unit configured for obtaining the multiplexing qubits in the quantum chip based on the timing of each quantum logic gate in the integral quantum computing task.

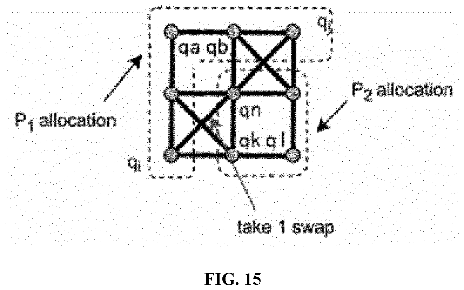

Exemplary, referring to FIG. 15, FIG. 15 shows a mapping partition diagram of two quantum computing tasks mapped on the same quantum chip in an embodiment of the present application. P1 allocation in FIG. 15 represent the mapping partition of one quantum computing task P1, P2 allocation represents the mapping partition of another quantum computing task P2 which may be combined with the mapping partition of the quantum computing task P1, and the two mapping partitions are respectively assigned in the two dotted boxes. qi and qj are the qubits in the executable quantum circuit corresponding to the quantum computing task P1 that needs to execute the dual-bit quantum logic gate immediately, and they are both in the mapped but not executed state.

The quantum computing task P1 and the quantum computing task P2 need to be executed within their respective mapping partitions, and by observing the topological structure of the quantum chip in FIG. 15, it can be seen that there is a qubit qn in the mapping partition of the quantum computing task P2, which is in a connection relation with the qubits qi and qj, respectively. If the qubit qn is in an idle state in the quantum computing task P2 during the execution of the quantum computing task P1, then after combining the quantum computing task P1 and the quantum computing task P2 into one integral quantum computing task, the qubit qn can be utilized to replace the qubit qj to perform the dual-bit quantum logic gate with the qubit qi when obtaining the qubit topological structure on the quantum chip based on the integral quantum computing task, the qubit qn is the multiplexing qubit of the qubit topological structure, and is a qubit shared by the quantum computing task P1 and the quantum computing task P2. Since the qubit topological structure obtained based on the integral quantum computing task may not include the qubit qj, the number of qubits contained in the qubit topological structure is less than the sum of the number of qubits of the quantum computing task P1 and the number of qubits of the quantum computing task P2, such that the remaining quantity of the free qubits in the quantum chip increases, therefore facilitating the mapping of more quantum computing tasks in a quantum chip and improving the resource utilization of the qubits in the quantum chip.

Those skilled in the art can understand that when two quantum computing tasks are combined into one integral quantum computing task, the measurement operations of these two quantum computing tasks generally need to start and end at the same time, and if two quantum computing tasks with a large difference in execution time are combined, the quantum computing task with a shorter execution time is forced to synchronize with the quantum computing task with a longer execution time, resulting in a decrease in throughput (that is, the number of quantum computing tasks executed by the system per unit of time). Therefore, in the present embodiment, the quantum computing task combining module 230 may further comprise:

a quantum computing task execution time obtaining unit configured for obtaining the execution time of all quantum computing tasks in the quantum computing task queue; a judging unit configured for judging whether the execution time of all the quantum computing tasks meets a preset requirement, wherein the preset requirements can be set according to the throughput of the system; a combination executing unit configured for combing two quantum computing tasks whose execution time meets a preset requirement into one integral quantum computing task.

Further, the quantum computing task execution time obtaining unit is configured for obtaining a first time required to execute the first quantum computing task and a second time required to execute the second quantum computing task, wherein the first and second quantum computing tasks are two quantum computing tasks in the quantum computing task queue; the judging unit is configured for judging whether the first time and the second time satisfy: the first time is less than or equal to twice the second time; the combination executing unit is configured for combining the first quantum computing task and the second quantum computing task into the integral quantum computing task when the judgment result is yes.

The general process of the quantum computer operating system to process a quantum computing task is as follows: first receiving quantum computing tasks sent from a user, then mapping these quantum computing tasks with a specific qubit topological structure of the quantum chip so as to complete the execution of these quantum computing tasks, and finally obtaining the execution result of the quantum computing task on each qubit by measuring the quantum state information of the qubit.

It should be noted that in the present embodiment, setting the preset requirement such that the first time is less than or equal to twice the second time, means that the second quantum computing task cannot be executed more than twice when the first quantum computing task is executed, otherwise the first quantum computing task and the second quantum computing task are not combined. This is due to the fact that after merging two quantum computing tasks with different execution times, the quantum computing task with a short execution time will be executed more than once for the purpose of synchronizing the measurement with the quantum computing task with a long execution time. If the second quantum computing task with a short execution time is executed more than twice during the execution of the first quantum computing task, this will result in the second quantum computing task, which could have ended earlier, will be forced to end in synchronization with the first quantum computing task, which results in a decrease in the throughput of the quantum computer operating system.

It should be noted that in the present embodiment, the combination of two quantum computing tasks is taken as an example to illustrate the technical solution of the present disclosure, and as will be appreciated by those skilled in the art, a greater number of quantum computing tasks may be combined into one integral quantum computing task in other embodiments, whose method is the same as the way of combining the two quantum computing tasks, which is not repeated herein.

According to the previous priority rule, the first quantum computing task and the second quantum computing task are two quantum computing tasks with the highest priority in the quantum computing task queue.

At present, in a process of converting a quantum logic gate, which is not supported by a quantum chip, in a quantum circuit corresponding to a quantum computing task into a quantum logic gate supported by the quantum chip, it is necessary to use a SWAP gate to convert between the unsupported and supported quantum logic gates of the quantum chip so that the quantum circuit corresponding to the quantum computing task can run on the quantum chip. The executable quantum circuit uses multiple SWAP gates to perform layer-by-layer switching operations between two adjacent qubits with a connection relationship, so that two distant qubits without a direct connection relationship on the quantum chip are connected. That is, the swapping operation through multiple SWAP gates is equivalent to the operation of adjacent two qubits.

Further, concurrent quantum computing tasks are mapped onto the quantum chip independently of each other, and the number of inter-qubit SWAP gate operations in the quantum chip is significantly increased in the case of multiple quantum computing tasks being executed simultaneously. After combining several concurrent quantum computing tasks into one integral quantum computing task, it is also possible to create shorter SWAP gate-swapping paths for the logic qubits in the quantum computing task when mapped with the qubit topological structure of the quantum chip, which helps to reduce the overhead of SWAP gates and reduces interference between multiple concurrent quantum computing tasks and improves overall fidelity.

Exemplary, please continue to FIG. 15, in the mapping partition of quantum computing task P1, there are three other qubits with a connection relationship between qi and qj, and these three qubits need to be used as routes to perform layer-by-layer swapping operations with the help of these three qubits in the execution of qi and qj, so the execution of qi and qj requires three routes. However, since there is an error in the gate operation of any two qubits with a direct connection relationship, that is, the errors of the gate operations between qi and qj performed through the three routes accumulate and increase, which reduces the fidelity of the quantum computing task P1 to some extent.

If the quantum computing task P1 and the quantum computing task P2 are combined, then the swapping operation when the qubits qi and qj perform the dual-bit quantum logic gate may take a shortcut. After the quantum computing task P1 and the quantum computing task P2 are combined, all qubits of the quantum computing task P1 and the quantum computing task P2 will share the combined mapping partition, at which time, qubits qi and qj will choose to execute the dual-bit quantum logic gate through a shorter swapping path than the swapping path inside the mapping region of the quantum computing task P1, that is, the qubits qi and qj will select the qubit qn, which is currently in the idle state, for SWAP gate operation, thus realizing the dual-bit quantum logic gate operation between the qubits qi and qj through one route and one SWAP gate operation. In this way, it is possible to effectively reduce the error of gate operation and improve the fidelity of quantum computing task P1 to some extent.

It can be seen that after combining multiple quantum computing tasks into one integral quantum computing task, there are more options for the swapping path for all qubits in the quantum computing tasks to perform SWAP gate operations, which makes it easier to perform mapping, and can effectively improve the resource utilization of qubits.

Further, since the qubits of the quantum chip are fragile and highly susceptible to noise interference, when the dual-bit quantum logic gate is required in the two quantum computing tasks at the same time, crosstalk will occur inevitably if the two quantum computing tasks are mapped with two qubit topological structures which are relatively close to each other, which will also lead to a sharp increase in the operation error of the dual-bit quantum logic gate, thus seriously affecting the fidelity of the quantum computing task to some extent. However, the timing for all the qubits in the quantum circuit corresponding to the one integral quantum computing task combined from the two quantum computing tasks to execute the quantum logic gates is relatively clear and definite, which enables the qubits of the executable dual-bit quantum logic gate with the same timing to be spatially isolated when partitioning the qubit topological structure corresponding to the integral quantum computing task.

Exemplary, please continue to FIG. 15, if there is a certain moment when it is necessary to run the dual-bit quantum logic gate in the execution timings of the quantum computing task P1 and quantum computing task P2, then the four qubits used to execute these dual-quantum logic gates are spaced apart in their respective mapping regions when mapping. For example, one can consider selecting the qubit qa and qb in the upper left corner in the mapping area of the quantum computing task P1 to execute the dual-bit quantum logic gate, and selecting the qubit qk and ql in the lower right corner in the mapping area of quantum computing task P2 to execute the dual-bit quantum logic gate. In this way, after completing the mapping of the integral quantum computing task with the qubit topological structure, the presence of crosstalk is directly and effectively avoided in the execution of the integral quantum computing task, thus effectively suppressing crosstalk and reducing its impact.

In addition, since the timing for all qubits in the quantum circuit corresponding to the integral quantum computing task to execute quantum logic gates is clear and unambiguous, it is possible to judge the qubit with crosstalk in the qubit topological structure according to the obtained timing of executing the quantum logic gate and calibrate it, therefore indirectly overcoming the influence of crosstalk between neighboring qubits executing the dual-bit quantum logic gate on the execution result of the integral quantum computing task.

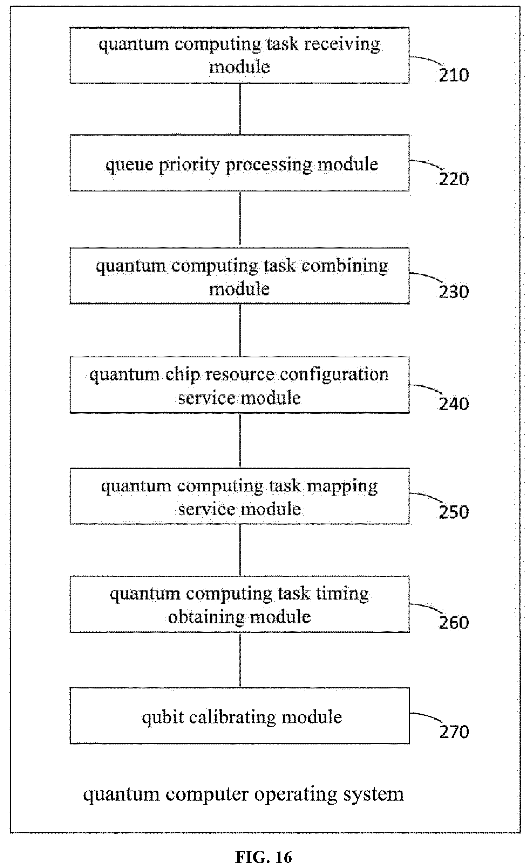

Please refer to FIG. 16, FIG. 16 shows another quantum computer operating system provided by an embodiment of the present application. On the basis of the previous embodiment, the quantum computer operating system further comprises:

a quantum computing task timing obtaining module 260 configured for obtaining the timing of each quantum logic gate in the integral quantum computing task;

a qubit calibrating module 270 configured for performing a calibration operation based on the timing on a qubit with crosstalk in the qubit topological structure.

It should be noted that the crosstalk coefficient of a certain qubit in a quantum chip can be obtained in the early test stage of the quantum chip. In the present embodiment, the qubit calibrating module 270 determines a qubit with crosstalk in the qubit topological structure according to the timing, and calibrates the qubit according to the crosstalk coefficient corresponding to the qubit. Wherein, calibrating the qubit by using the crosstalk coefficient of the qubit belongs to a common general knowledge in the art, and will not be repeated herein.

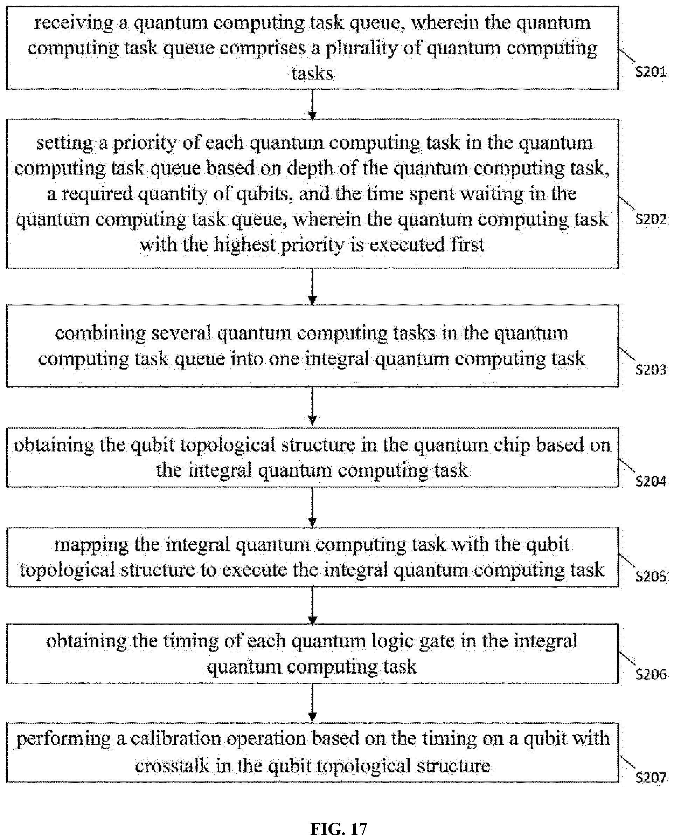

Based on the same inventive concept, please refer to FIG. 17, an embodiment of the present application also proposes a processing method for quantum computing tasks in a quantum computer, which comprises the following steps:

Step S201: receiving a quantum computing task queue, wherein the quantum computing task queue comprises a plurality of quantum computing tasks;

Step S203: combining several quantum computing tasks in the quantum computing task queue into one integral quantum computing task;

Step S204: obtaining the qubit topological structure in the quantum chip based on the integral quantum computing task;

Step S205: mapping the integral quantum computing task with the qubit topological structure to execute the integral quantum computing task.

Further, processing method for quantum computing tasks in a quantum computer further comprises:

Step S206: obtaining the timing of each quantum logic gate in the integral quantum computing task;

Step S207: performing a calibration operation based on the timing on a qubit with crosstalk in the qubit topological structure.

Optionally, in Step S203, said "combining several quantum computing tasks in the quantum computing task queue into one integral quantum computing task", comprises:

obtaining a first time required to execute the first quantum computing task and a second time required to execute the second quantum computing task, wherein the first and second quantum computing tasks are two quantum computing tasks in the quantum computing task queue, the first time is greater than the second time;

judging whether the first time and the second time satisfy: the first time is less than or equal to twice the second time;

combining the first quantum computing task and the second quantum computing task into the integral quantum computing task when the judgment result is yes.

Optionally, the processing method further comprises:

Step S202: setting a priority of each quantum computing task in the quantum computing task queue based on depth of the quantum computing task, a required quantity of qubits, and the time spent waiting in the quantum computing task queue, wherein the quantum computing task with the highest priority is executed first.

Optionally, the first quantum computing task and the second quantum computing task are two quantum computing tasks with the highest priority in the quantum computing task queue.

The execution method for quantum computing tasks in a quantum computer and the quantum computer operating system belong to the same inventive concept, and will not be repeated herein.

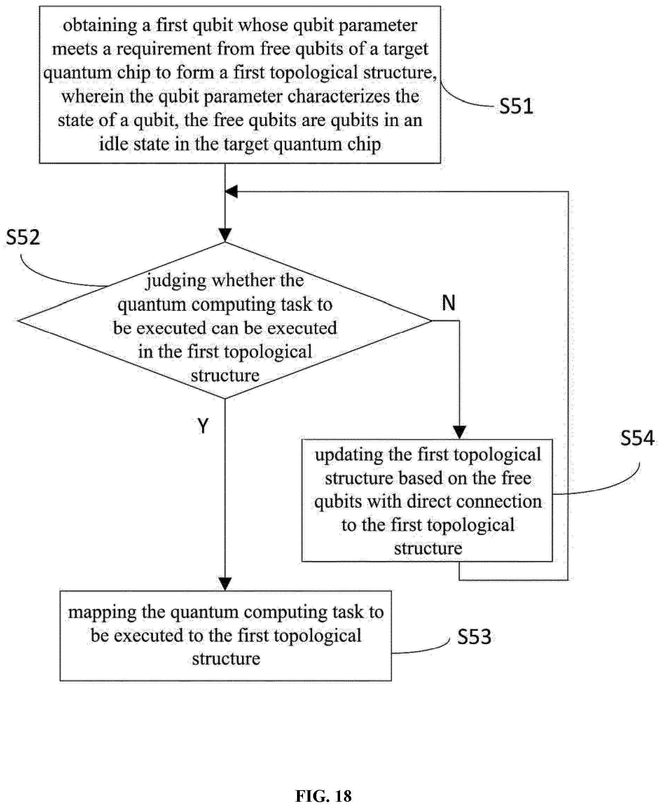

Please refer to FIG. 18, an embodiment of the present application proposes a quantum computing task mapping method, which comprises:

S51: obtaining a first qubit whose qubit parameter meets a requirement from free qubits of a target quantum chip to form a first topological structure, wherein the qubit parameter characterizes the state of a qubit, the free qubits are qubits in an idle state in the target quantum chip;

S52: judging whether the quantum computing task to be executed can be executed in the first topological structure;

S53: if yes, mapping the quantum computing task to be executed to the first topological structure;

S54: if not, updating the first topological structure based on the free qubits with direct connection to the first topological structure, and then returning to the step of judging whether the quantum computing task to be executed can be executed in the first topological structure.

The difference with the prior art is that the quantum computing task mapping method proposed by the present application dynamically partition the free qubits of a quantum chip, where the quantity of the free qubits meets a requirement, in real time with high quality according to the actual needs of the quantum computing task to be executed, and the obtained qubit topological structure can be matched with the quantum computing task to be executed, resulting in no matching waiting time and high matching degree, which greatly improves the resource utilization of the quantum chip, and effectively improves the execution timeliness of the quantum computing task in the program waiting queue at the same time; with the mapping method of the present disclosure, for each quantum computing task in the program waiting queue, it is possible to quickly find the optimal partition area on free qubits of the quantum chip, which meets a requirement, in the quantum chip cluster of the system, so as to perform mapping.

Specifically, in Step S54, said "updating the first topological structure based on the free qubits with direct connection to the first topological structure", comprises:

A first step: obtaining the free qubits with direct connection to the first topological structure as to-be-partitioned qubits, wherein each of the to-be-partitioned qubits respectively forms one integral structure with the first topological structure;

A second step: according to the tightness of the integral structure, selecting one of all the to-be-partitioned qubits and partitioning it into the first topological structure so as to update the first topological structure.

Those skilled in the art should understand that the tightness refers to the tightness of the connection between the qubits in the integral structure. The tightness can be obtained through the community detection algorithm, which is described above and will not be repeated herein.

The quantum computing task creates entanglement by using the dual-bit quantum logic gate, and the dual-bit quantum logic gate can only be performed between two physical qubits coupled on the quantum chip. Therefore, the qubits on the quantum chip required to execute a single quantum computing task should be closely assigned, and crosstalk and other mutual interference between different quantum computing tasks should be avoided. The qubit topological structure is equivalent to the community structure where free physical qubits on the quantum chip aggregate. Thus, the tightness of the integral structure can be obtained by using the calculation formula of the community detection algorithm, wherein each qubit in the grid structure of the quantum chip is equivalent to the vertex of the community structure, and the link between the two qubits is equivalent to the edge of the community structure.

It should be noted that, in the specific implementation process, when the qubit is partitioned into the first topological structure each time, it is possible to partition the to-be-partitioned qubits corresponding to the combined integral structure with the highest tightness into the first topological structure. A threshold can also be set for the tightness, and any one of the qubits meeting the threshold requirement is partitioned into the first topological structure. There are many other ways for implementation, which are not described herein one by one, and can be selected according to actual needs in practical applications. Those skilled in the art can understand that the tightness of the integral structure is used as a factor to obtain the first topological structure, which can ensure that the obtained tightness of the first topological structure meets the requirement.

In addition to obtaining the first topological structure through the tightness of the integral structure, in Step S4, said "updating the first topological structure based on the free qubits with direct connection to the first topological structure", can also be executed in the following ways:

A first step: obtaining the free qubits with direct connection to the first topological structure as to-be-partitioned qubits, wherein each of the to-be-partitioned qubits respectively forms one integral structure with the first topological structure;

A second step: according to fidelity parameters of qubits in the integral structure, selecting one of all the to-be-partitioned qubits and partitioning it into the first topological structure so as to update the first topological structure, wherein the fidelity parameters comprises one or a combination of reading fidelity, fidelity of any one qubit when performing a single-bit quantum logic gate operation, and fidelity of any two qubits with a direct connection relationship when performing a dual-bit quantum logic gate operation therebetween. The reading fidelity refers to the accuracy when reading the quantum state information on the qubit, the fidelity of a single-bit quantum logic gate operation is obtained by the error rate of performing a single-bit quantum logic gate operation on a qubit, the sum of fidelity and error rate is 1, and the fidelity of dual-bit quantum logic gate operation is obtained in a similar way as the fidelity of the single-bit quantum logic gate. Those skilled in the art can understand that a large number of tests are required before the quantum chip is put into use, and the fidelity parameters are obtained in the testing stage of the quantum chip and are directly used as known parameters in the specific implementation.

It should be noted that, in the specific implementation process, when the qubit is partitioned into the first topological structure each time, it is possible to partition the to-be-partitioned qubits corresponding to the combined integral structure with the highest fidelity parameter into the first topological structure. A threshold can also be set for the fidelity parameter, and any one of the qubits meeting the threshold requirement is partitioned into the first topological structure. There are many other ways for implementation, which are not described herein one by one, and can be selected according to actual needs in practical applications. Those skilled in the art can understand that the fidelity parameter of the qubits in the integral structure is used as a factor to obtain the first topological structure, which can ensure that the obtained fidelity parameter of the first topological structure meets the requirement.

Generally, the quantum state information of qubits is obtained through feedback lines, and each feedback line is coupled to multiple qubits. When one qubit coupled to the same feedback line is being measured, other qubits cannot be measured. If two quantum computing tasks share the same feedback line and have different depths, their measurement operations must be synchronized or do not overlap in time. In order to avoid partial overlap of the measurement processes of two quantum computing tasks, the start of a short-depth quantum computing task is generally delayed to ensure synchronous measurement of the two quantum computing tasks. However, the inventor has found in practical application that the existing practice is equivalent to lengthening the total consumption time of the short quantum computing task, thereby causing the qubits used for executing the short depth quantum computing task to be idle for a period of time. Based on these findings, the inventor considered obtaining the first topological structure with the number of feedback lines used in the integral structure as a factor. The specific scheme is as follows:

Said "updating the first topological structure based on the free qubits with direct connection to the first topological structure", comprises:

A first step: obtaining the free qubits with direct connection to the first topological structure as to-be-partitioned qubits, wherein each of the to-be-partitioned qubits respectively forms one integral structure with the first topological structure;

A second step: according to the quantity of feedback lines in the integral structure, selecting one of all the to-be-partitioned qubits and partitioning it into the first topological structure so as to update the first topological structure, wherein the feedback lines couple several qubits in the quantum chip and transmit quantum state information.

It should be noted that, in the specific implementation process, when the qubit is partitioned into the first topological structure each time, it is possible to partition the to-be-partitioned qubits corresponding to the combined integral structure with the least quantity of feed lines into the first topological structure. A threshold can also be set for the quantity of feedback lines, and any one of the qubits meeting the threshold requirement is partitioned into the first topological structure. There are many other ways for implementation, which are not described herein one by one, and can be selected according to actual needs in practical applications. Those skilled in the art can understand that the quantity of feedback lines of qubits in the integral structure is used as a factor to obtain the first topological structure, which can ensure that the quantity of feedback lines of the obtained first topological structure meets the requirement.

Further, in addition to considering the tightness, the fidelity parameters, and the quantity of feedback lines separately, these factors can also be combined to evaluate whether the qubit is suitable to be incorporated into the first topological structure. Therefore, in Step S4, said "updating the first topological structure based on the free qubits with direct connection to the first topological structure" may be executed in the following way:

A first step: obtaining the free qubits with direct connection to the first topological structure as to-be-partitioned qubits, wherein each of the to-be-partitioned qubits respectively forms one integral structure with the first topological structure;

A second step: according to the tightness of the integral structure, the fidelity parameters of the qubits in the integral structure, the quantity of feedback lines, selecting one of all the to-be-partitioned qubits and partitioning it into the first topological structure so as to update the first topological structure, wherein the fidelity parameters comprises one or a combination of reading fidelity, fidelity of any one qubit when performing a single-bit quantum logic gate operation, and fidelity of any two qubits with a direct connection relationship when performing a dual-bit quantum logic gate operation therebetween, and the feedback lines couple several qubits in the quantum chip and transmit quantum state information.

Wherein, said "according to the tightness of the integral structure, the fidelity parameters of the qubits in the integral structure, and the quantity of feedback lines, partitioning several to-be-partitioned qubits into the first topological structure so as to update the first topological structure", may specifically comprise:

A first step: determining respective weight coefficients of the tightness, the fidelity parameters and the quantity of feedback lines according to the quantum computing task to be executed and the target quantum chip;

A second step: based on the determined weight coefficients, partitioning several to-be-partitioned qubits into the first topological structure according to the tightness of the integral structure, the fidelity parameters of the qubits in the integral structure, and the quantity of feedback lines, so as to update the first topological structure.

As will be appreciated by those skilled in the art, the tightness of the integral structure, the fidelity parameters of the qubits in the integral structure, and the weight coefficients of the quantity of feedback lines can be adjusted according to an actual need, which is not limited herein. In order to facilitate understanding of the technical solutions of the present disclosure, the following provides an embodiment of using a reward function to characterize the above factors in the integral structure. Specifically, the value of the reward function is obtained by a combination of the tightness of the integral structure, the fidelity parameters of the qubits in the integral structure, and the quantity of feedback lines. Wherein, the introduction of the reward function is as described above and is not repeated herein.

In addition, each quantum computing task needs to be executed and completed within the coherence time of the qubit, otherwise, a large error will be generated in the execution result of the quantum computing task. Therefore, before configuring quantum chip resources for a quantum computing task, it is necessary to find out the unavailable qubits for the quantum computing task, and exclude the unavailable qubits from the first topological structure to be partitioned. Specifically, the quantum computing task mapping method further comprises:

A first step: obtaining coherence time of all free qubits with direct connection to the first topological structure;

A second step: setting a qubit with coherence time less than the first threshold to an unavailable qubit, wherein the first topological structure does not include the unavailable qubit.

In order for those skilled in the art to better understand the technical solution of the present disclosure, the above solution is described in detail below in combination with a specific example:

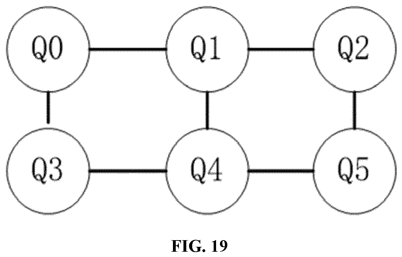

Taking a quantum computing task that requires four qubits to participate in the execution as an example, it is necessary to find the optimal execution area for the quantum computing task on the quantum chip. Assuming that a total of 6 free qubits are available in the existing quantum chip, the structure of the quantum chip can be referred to in FIG. 19, and the quantum chip is a $2\times3$ two-dimensional structure. The quantum chip comprises qubits $Q_0$, $Q_1$, $Q_2$, $Q_3$, $Q_4$, and $Q_5$, and it is assumed that the coherence time of all qubits meets the requirements of the quantum computing task.

It is necessary to find a suitable qubit in 6 qubits at the initial stage, and assuming that the qubit Q0 meets the requirements, the qubit Q0 is set as the integral structure. Since the execution requirements of the quantum computing task cannot be met at this time, it is also necessary to combine the qubits with a direct connection relationship to the current integral structure (in this case, only qubit Q0 in included) into the integral structure, that is, to combine the qubits Q1 and Q3 into the integral structure respectively, and judge the relationship between the magnitude of the reward function value of the integral structure of the combination of qubits Q0 and Q1 and the reward function value of the integral structure of the combination of qubits Q0 and Q3. Assuming that the reward function value of the integral structure of the combination of qubits Q0 and Q1 is greater than the reward function value of the integral structure of the combination of qubits Q0 and Q3, then updating the integral structure to include Q0 and Q1, and updating the first topological structure at the same time. Since the number of qubits in the first topological structure still cannot meet the requirements of the quantum computing task, other qubits need to be combined. At the moment, the to-be-partitioned qubits of the integral structure comprise qubits Q2, Q3, and Q4, and the three qubits are respectively combined with the current integral structure to obtain a new integral structure, and judging the relationship between the magnitude of the reward function values. Assuming that the reward function value of the integral structure of the combination of the qubits Q0, Q1, and Q2 is the largest, partitioning the qubit Q2 into the first topological structure, and updating the integral structure. At the moment, the integral structure and the first topological structure comprise qubits Q0, Q1, and Q2. Similarly, at this time, the number of qubits in the first topological structure still cannot meet the requirements of the quantum computing task, and therefore, other qubits need to be combined. The to-be-partitioned qubits of the current integral structure comprises qubits Q3, Q4, and Q5, these three qubits are combined into the current integral structure respectively to obtain a new integral structure, and judging the magnitude between the reward function values. Assuming that the reward function value of the integral structure of the combination of the qubits Q0, Q1, Q2, and Q3 is the maximum, then partitioning the qubit Q3 into the first topological structure, and updating the integral structure. At the moment, the number of qubits in the first topological structure meets the requirement of the quantum computing task, so the first topological structure at this time is taken as the required structure, thereby mapping the quantum computing task with the current first topological structure.

Based on the same inventive concept, the present embodiment also proposes a quantum computing task mapping device, which comprises:

a first module configured for obtaining a first qubit whose qubit parameter meets a requirement from free qubits of a target quantum chip to form a first topological structure, wherein the qubit parameter characterizes the state of a qubit, the free qubits are qubits in an idle state in the target quantum chip;
a second module configured for judging whether the quantum computing task to be executed can be executed in the first topological structure;
a third module configured for, if yes, mapping the quantum computing task to be executed to the first topological structure;
a fourth module configured for, if not, updating the first topological structure based on the free qubits with direct connection to the first topological structure, and then returning to the step of judging whether the quantum computing task to be executed can be executed in the first topological structure.

It is understood that the first module, the second module, the third module, and the fourth module may be combined and implemented in one device, or any one of the modules may be partitioned into a plurality of sub-modules, or at least part of the functionality of one or more of the first module, the second module, the third module, and the fourth module may be combined with at least part of the functionality of the other modules and implemented in one functional module. According to an embodiment of the present invention, at least one of the first module, the second module, the third module, and the fourth module may be implemented at least partially as a hardware circuit, e.g., a field-programmable gate array (FPGA), a programmable logic array (PLA), a system-on-chip, a system-on-a-substrate, a system-on-a-package, an application-specific integrated circuit (ASIC), or may be implemented in hardware or firmware in any other reasonable manner of integrating or packaging the circuit, or implemented in a suitable combination of three implementations of software, hardware, and firmware. Alternatively, at least one of the first module, the second module, the third module, and the fourth module may be implemented, at least in part, as a computer program module which, when executed by a computer, performs the function of the respective module.

Based on the same inventive concept, an embodiment of the present application further proposes a quantum computer, comprising the quantum computer operating system described in any one of the above feature descriptions.

Based on the same inventive concept, an embodiment of the present application further proposes a readable storage medium, on which a computer program is stored, and the computer program, when executed by a processor, can implement the execution method described in any of the above feature descriptions.

The readable storage medium can be a tangible device that can retain and store instructions for use by an instruction execution device, which may be, for example, but is not limited to, an electronic storage device, or any suitable combination of the foregoing. A non-exhaustive list of more specific examples of the readable storage medium includes: a portable computer diskette, a hard disk and so on. Computer programs described herein can be downloaded to respective computing/processing devices from a readable storage medium or to an external computer or external storage device via a network, for example, the Internet, a local area network and so on. A network adapter card or network interface in each computing/processing device receives computer programs from the network and forwards the computer programs for storage in a readable storage medium within the respective computing/processing device. Computer programs for carrying out operations of the present disclosure may be assembler instructions, instruction-set-architecture (ISA) instructions, or either source code or object code written in any combination of one or more programming languages, comprising an object oriented programming language such as Smalltalk, C++ or the like, and conventional procedural programming languages, such as the "C" programming language or similar programming languages. The computer programs may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, comprising a local area network (LAN) or a wide area network (WAN), or the connection may be made to an external computer (for example, through the Internet using an Internet Service Provider). In some embodiments, electronic circuitry comprising, for example, programmable logic circuitry, field-programmable gate arrays (FPGA), or programmable logic arrays (PLA) may execute the computer programs by utilizing state information of the computer programs to personalize the electronic circuitry, in order to perform aspects of the present disclosure.

Aspects of the present disclosure are described herein with reference to flowchart illustrations and/or block diagrams of methods, systems, and computer program products according to embodiments of the invention. It will be understood that each block of the flowchart illustrations and/or block diagrams, and combinations of blocks in the flowchart illustrations and/or block diagrams, can be implemented by computer programs. These computer programs may be provided to a processor of a general purpose computer, special purpose computer, or other programmable data processing apparatus to produce a machine, such that the programs, which execute via the processor of the computer or other programmable data processing apparatus, create means for implementing the functions/acts specified in the flowchart and/or block diagram block or blocks. These computer programs may also be stored in a readable storage medium that can direct a computer, a programmable data processing apparatus, and/or other devices to function in a particular manner, such that the readable storage medium having the computer programs stored therein comprises an article of manufacture comprising instructions which implement aspects of the function/act specified in the flowchart and/or block diagram block or blocks.

The computer programs may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

Based on the same inventive concept, an embodiment of the present application further proposes an electronic device, comprising a memory and a processor, wherein the memory stores a computer program therein, and the processor is configured to run the computer program to execute the execution method described in any one of the above feature descriptions.

In the description of the present specification, the reference term "an embodiment", "some embodiments", "examples" or "specific examples" and the like means that specific features, structures, materials, or characteristics described in conjunction with the embodiment or example are included in at least one embodiment or example of the present disclosure. In the present specification, schematic expressions of the above terms are not necessarily directed to the same embodiment or example. Moreover, the specific features, structures, materials, or characteristics described may be combined in any suitable manner in any one or more embodiments. In addition, those skilled in the art may join and combine different embodiments or examples described in this specification.

The foregoing is only preferred embodiments of the present disclosure rather than limitation thereto. Without departing from the scope of the technical solution of the present disclosure, any form of equivalent substitution or modification and other changes made by any person skilled in the art to the technical solution and technical content disclosed in the present application does not deviate from the content of the technical solution of the present disclosure, still falls within the scope of protection of the present disclosure.

**Claims**

1. A quantum computer operating system, **character-**

**ized by** comprising:

a quantum chip resource configuration service module configured for obtaining a qubit topological structure that meets a requirement from free qubits of a quantum chip based on community detection algorithm and greedy algorithm, wherein the free qubits are qubits in the quantum chip that are not assigned to execute a quantum computing task;

a quantum computing task mapping service module configured for mapping a quantum computing task to be processed with the qubit topological structure to execute the quantum computing task to be processed.

2. The quantum computer operating system of claim 1, **characterized by** further comprising:
a quantum computing task assigning service module configured for determining the quantum computing task to be processed from currently unprocessed quantum computing tasks.

3. The quantum computer operating system of claim 2, **characterized in that** the quantum chip resource configuration service module comprises:

a first qubit obtaining unit configured for obtaining a first qubit that meets a preset requirement, wherein the preset requirement is that reading fidelity of the first qubit is within the preset range;
a qubit topological structure obtaining unit configured for obtaining the qubit topological structure that meets a requirement based on the first qubit, the community detection algorithm and the greedy algorithm.

4. The quantum computer operating system of claim 3, **characterized in that** the qubit topological structure obtaining unit comprises:

a parameter obtaining subunit configured for obtaining the reading fidelity of the qubits near the first qubit, a reliability parameter for executing a double-bit quantum logic gate operated on any two qubits which are in a direct connection relation among the qubits near the first qubit, and quantity of feedback lines, wherein the feedback lines are coupled to several qubits and are used to measure quantum state information of qubits;
a topological structure partitioning subunit configured for partitioning a qubit whose value of reward function value meets a requirement into the qubit topological structure, wherein the reward function is obtained through the community detection algorithm and the greedy algorithm, the value of the reward function is obtained through the reading fidelity of the qubits near the first qubit, the reliability parameter for executing a double-bit quantum logic gate operated on any two qubits which are in a direct connection relation among the qubits near the first qubit, and the quantity of feedback lines.

5. The quantum computer operating system of claim 4, **characterized in that** the quantum chip resource configuration service module further comprises:

a quantity judging unit configured for judging whether quantity of qubits in the qubit topological structure is greater than or equal to quantity of qubits required by the quantum computing task to be processed;
a processing unit configured for when the judgment result is yes, outputting a first instruction to the quantum computing task mapping service module such that the qubit topological structure is used for executing the quantum computing task to be processed; when the judgment result is no, outputting a second instruction to the topological structure partitioning subunit such that the topological structure partitioning subunit continues partitioning other qubits that meet a requirement into the qubit topological structure.

6. The quantum computer operating system of claim 4, **characterized in that** the reward function is:

$$F = Q_m - Q_o + \omega EV + \beta \frac{1}{L}$$

wherein, F is a value of the reward function, $Q_i$ is tightness of the qubit topological structure after adding one of the other qubits, $Q_o$ is tightness of the qubit topological structure before adding one of the other qubits, E is an average fidelity for executing a double-bit quantum logic gate operated on any two qubits in the qubit topological structure which are in a direct connection relation after adding one of the other qubits, V is an average reading fidelity of all qubits in the qubit topological structure after adding one of the other qubits, $\omega$, $\beta$ are preconfigured weight coefficients, and L is a total quantity of feedback lines in the qubit topological structure after adding one of the other qubits.

7. The quantum computer operating system of claim 2, **characterized in that** the quantum computer operating system further comprises:

a coherent time obtaining and judging module configured for obtaining coherence time of the free qubits in the quantum chip and judging whether coherent time of every free qubit is greater than a first threshold, wherein the first threshold is determined according to execution time of the quantum computing task to be processed;

a quantum chip resource discrimination module configured for when the judgment result is no, setting a corresponding qubit as an unavailable qubit, wherein the quantum chip resource configuration service module will not partition the unavailable qubit into the qubit topological structure.

8.  The quantum computer operating system of claim 1, **characterized by** comprising:

    a quantum computing task receiving module configured for receiving a quantum computing task queue, wherein the quantum computing task queue comprises a plurality of quantum computing tasks;
    a quantum computing task priority processing module configured for obtaining a priority of each quantum computing task in the quantum computing task queue based on depth of the quantum computing task, a required quantity of qubits, and the waiting time in the quantum computing task queue, wherein the quantum computing task with the highest priority is executed first; and
    a quantum computing task combining module configured for combining several quantum computing tasks in the quantum computing task queue into one integral quantum computing task in order of priority from high to low, and updating the quantum computing task queue;
    wherein a quantum chip resource assigning service module is further configured for obtaining a qubit topological structure that meets a requirement from the free qubits of the quantum chip by using the community detection algorithm and the greedy algorithm based on the updated quantum computing task queue;
    wherein a quantum computing task scheduling and mapping module is further configured for scheduling a quantum computing task to be executed based on the updated quantum computing task queue, and for mapping the quantum computing task to be executed to the qubit topological structure in order of priority from high to low.

9.  An executing method for quantum computing tasks in a quantum computer, **characterized by** comprising:

    obtaining a qubit topological structure that meets a requirement from free qubits of a quantum chip based on community detection algorithm and greedy algorithm, wherein the free qubits are qubits in the quantum chip that are not assigned to execute a quantum computing task;
mapping a quantum computing task to be processed with the qubit topological structure to execute the quantum computing task to be processed.

10. The executing method of claim 9 for quantum computing tasks in a quantum computer, **characterized by** comprising:
    determining the quantum computing task to be processed from currently unprocessed quantum computing tasks.

11. The executing method of claim 10 for quantum computing tasks in a quantum computer, **characterized in that** said "obtaining a qubit topological structure that meets a requirement from free qubits of a quantum chip based on community detection algorithm and greedy algorithm", comprises:

    obtaining a first qubit that meets a preset requirement, wherein the preset requirement is that reading fidelity of the first qubit is within the preset range;
    obtaining the qubit topological structure that meets a requirement based on the first qubit, the community detection algorithm and the greedy algorithm.

12. The executing method of claim 11 for quantum computing tasks in a quantum computer, **characterized in that** said "obtaining the qubit topological structure that meets a requirement based on the first qubit, the community detection algorithm and the greedy algorithm", comprises:

    obtaining the reading fidelity of the qubits near the first qubit, a reliability parameter for executing a double-bit quantum logic gate operated on any two qubits which are in a direct connection relation among the qubits near the first qubit, and quantity of feedback lines;
    partitioning a qubit whose value of reward function value meets a requirement into the qubit topological structure, wherein the reward function is obtained through the community detection algorithm and the greedy algorithm, the value of the reward function is obtained through the reading fidelity of the qubits near the first qubit, the reliability parameter for executing a double-bit quantum logic gate operated on any two qubits which are in a direct connection relation among the qubits near the first qubit, and the quantity of feedback lines.

13. The executing method of claim 12 for quantum computing tasks in a quantum computer, **characterized in that** said "obtaining a qubit topological structure that meets a requirement from free qubits of a quantum chip based on community detection algorithm and greedy algorithm", further comprises:

judging whether quantity of qubits in the qubit topological structure is greater than or equal to quantity of qubits required by the quantum computing task to be processed;
if yes, outputting a first instruction to the quantum computing task mapping service module such that the qubit topological structure is used for executing the quantum computing task to be processed;
if not, outputting a second instruction to the topological structure partitioning subunit such that the topological structure partitioning subunit continues partitioning other qubits that meet a requirement into the qubit topological structure.

14. The executing method of claim 12 for quantum computing tasks in a quantum computer, **characterized in that** the reward function is:

$$F = Q_m - Q_o + \omega EV + \beta \frac{1}{L}$$

wherein, F is a value of the reward function, $Q_m$ is tightness of the qubit topological structure after adding one of the other qubits, $Q_o$ is tightness of the qubit topological structure before adding one of the other qubits, E is an average fidelity for executing a double-bit quantum logic gate operated on any two qubits in the qubit topological structure which are in a direct connection relation after adding one of the other qubits, V is an average reading fidelity of all qubits in the qubit topological structure after adding one of the other qubits, $\omega$, $\beta$ are preconfigured weight coefficients, and L is a total quantity of feedback lines in the qubit topological structure after adding one of the other qubits.

15. The executing method of claim 10 for quantum computing tasks in a quantum computer, **characterized in that** the executing method further comprises:

obtaining coherence time of the free qubits in the quantum chip;
judging whether coherent time of every free qubit is greater than a first threshold, wherein the first threshold is determined according to execution time of the quantum computing task to be processed;
if not, setting a corresponding qubit as an unavailable qubit, wherein the quantum chip resource configuration service module will not partition the unavailable qubit into the qubit topological structure.

16. The executing method of claim 9 for quantum computing tasks in a quantum computer, **characterized by** further comprising:

receiving a quantum computing task queue, wherein the quantum computing task queue comprises a plurality of quantum computing tasks;
obtaining a priority of each quantum computing task in the quantum computing task queue based on depth of the quantum computing task, a required quantity of qubits, and the waiting time in the quantum computing task queue, wherein the quantum computing task with the highest priority is executed first; and
combining several quantum computing tasks in the quantum computing task queue into one integral quantum computing task in order of priority from high to low, and updating the quantum computing task queue;
wherein, said "obtaining a qubit topological structure that meets a requirement from free qubits of a quantum chip based on community detection algorithm and greedy algorithm", comprises: obtaining a qubit topological structure that meets a requirement from the free qubits of the quantum chip by using the community detection algorithm and the greedy algorithm based on the updated quantum computing task queue;
wherein, said "mapping a quantum computing task to be processed with the qubit topological structure to execute the quantum computing task to be processed", comprises: scheduling a quantum computing task to be executed based on the updated quantum computing task queue, and for mapping the quantum computing task to be executed to the qubit topological structure in order of priority from high to low.

17. A quantum computer, **characterized by** comprising the quantum computer operating system of any one of claims 1 to 8.

18. A readable storage medium storing a computer program therein, **characterized in that** the computer program can implement the executing method of any one of claims 9 to 16 when executed by a processor.

19. An electronic device comprising a memory and a processor, **characterized in that** the memory stores a computer program therein, and the processor is configured for running the computer program to execute the executing method of any one of claims 9 to 16.

**FIG. 1**

**FIG. 2**

FIG. 3

**FIG. 4**

**FIG. 5**

FIG. 6

determining a quantum computing task to be processed from currently unprocessed quantum computing tasks — S22

obtaining a qubit topological structure that meets a requirement from free qubits of a quantum chip based on community detection algorithm and greedy algorithm, wherein the free qubits are qubits in the quantum chip that are not assigned to execute a quantum computing task — S24

mapping a quantum computing task to be processed with the qubit topological structure to execute the quantum computing task to be processed — S26

**FIG. 7**

determining a quantum computing task to be processed from currently unprocessed quantum computing tasks ⟋ S22

obtaining coherence time of the free qubits in the quantum chip, judging whether coherent time of every free qubit is greater than a first threshold, wherein the first threshold is determined according to execution time of the quantum computing task to be processed; if not, setting a corresponding qubit as an unavailable qubit, wherein the quantum chip resource configuration service module 14 will not partition the unavailable qubit into the qubit topological structure ⟋ S23

obtaining a qubit topological structure that meets a requirement from free qubits of a quantum chip based on community detection algorithm and greedy algorithm, wherein the free qubits are qubits in the quantum chip that are not assigned to execute a quantum computing task ⟋ S24

mapping a quantum computing task to be processed with the qubit topological structure to execute the quantum computing task to be processed ⟋ S26

**FIG. 8**

quantum computing task
receiving module
410

quantum computing task
priority processing module
420

quantum computing task
combining module
430

quantum chip resource
assigning service module
440

quantum computing task
scheduling and mapping
module
450

quantum computer
operating system

**FIG. 9**

**FIG. 10**

**FIG. 11**

receiving a quantum computing task queue, wherein the quantum computing task queue comprises a plurality of quantum computing tasks — S41

obtaining a priority of each quantum computing task in the quantum computing task queue based on depth of the quantum computing task, a required quantity of qubits, and the time spent waiting in the quantum computing task queue, wherein the quantum computing task with the highest priority is executed first — S42

combining several quantum computing tasks in the quantum computing task queue into one integral quantum computing task in order of priority from high to low, and updating the quantum computing task queue — S43

obtaining a qubit topological structure that meets a requirement from the free qubits of the quantum chip by using the community detection algorithm and the greedy algorithm based on the updated quantum computing task queue; wherein the free qubits are qubits in the quantum chip that are not assigned a quantum computing task — S44

scheduling a quantum computing task to be executed based on the updated quantum computing task queue, and mapping the quantum computing task to be executed to the qubit topological structure in order of priority from high to low — S45

**FIG. 12**

quantum computing task
receiving module — 210

quantum computing task
combining module — 230

quantum chip resource
configuration service
module — 240

quantum computing task
mapping service module — 250

quantum computer operating
system

**FIG. 13**

quantum computing task
receiving module — 210

quantum priority processing
module — 220

quantum computing task
combining module — 230

quantum chip resource
configuration service module — 240

quantum computing task
mapping service module — 250

quantum computer operating
system

**FIG. 14**

**FIG. 15**

quantum computing task receiving
module
210

queue priority processing module
220

quantum computing task combining
module
230

quantum chip resource configuration
service module
240

quantum computing task mapping
service module
250

quantum computing task timing
obtaining module
260

qubit calibrating module
270

quantum computer operating system

**FIG. 16**

receiving a quantum computing task queue, wherein the quantum computing task queue comprises a plurality of quantum computing tasks —— S201

setting a priority of each quantum computing task in the quantum computing task queue based on depth of the quantum computing task, a required quantity of qubits, and the time spent waiting in the quantum computing task queue, wherein the quantum computing task with the highest priority is executed first —— S202

combining several quantum computing tasks in the quantum computing task queue into one integral quantum computing task —— S203

obtaining the qubit topological structure in the quantum chip based on the integral quantum computing task —— S204

mapping the integral quantum computing task with the qubit topological structure to execute the integral quantum computing task —— S205

obtaining the timing of each quantum logic gate in the integral quantum computing task —— S206

performing a calibration operation based on the timing on a qubit with crosstalk in the qubit topological structure —— S207

**FIG. 17**

obtaining a first qubit whose qubit parameter
meets a requirement from free qubits of a target
quantum chip to form a first topological structure,
wherein the qubit parameter characterizes the
state of a qubit, the free qubits are qubits in an
idle state in the target quantum chip

S51

S52

judging whether the
quantum computing task to
be executed can be executed
in the first topological
structure

N

Y

updating the first topological
structure based on the free
qubits with direct connection
to the first topological
structure

S54

mapping the quantum computing task to
be executed to the first topological
structure

S53

**FIG. 18**

**FIG. 19**

## INTERNATIONAL SEARCH REPORT

International application No.

**PCT/CN2022/112012**

**A.    CLASSIFICATION OF SUBJECT MATTER**

G06N 10/00(2022.01)i;  G06F 9/50(2006.01)i;  G06F 9/48(2006.01)i

According to International Patent Classification (IPC) or to both national classification and IPC

**B.    FIELDS SEARCHED**

Minimum documentation searched (classification system followed by classification symbols)

G06N G06F

Documentation searched other than minimum documentation to the extent that such documents are included in the fields searched

Electronic data base consulted during the international search (name of data base and, where practicable, search terms used)

CNTXT; CNABS; CNKI; VEN; USTXT; WOTXT; EPTXT: 量子, 比特, 操作系统, 芯片, 社区发现算法, 贪婪算法, 拓扑结构, 任务, 奖励函数, 优先级, quantum, qubit, operating system, chip, topology, task, reward function, priority

**C.    DOCUMENTS CONSIDERED TO BE RELEVANT**

| Category* | Citation of document, with indication, where appropriate, of the relevant passages | Relevant to claim No. |
|---|---|---|
| Y | CN 108921296 A (ORIGIN QUANTUM COMPUTING TECHNOLOGY CO., LTD.) 30 November 2018 (2018-11-30)<br>      description, paragraphs [0005]-[0040] | 1-3, 7-11, 15-19 |
| Y | CN 113010302 A (INFORMATION ENGINEERING UNIVERSITY OF PLA) 22 June 2021 (2021-06-22)<br>      description, paragraphs [0004]-[0053] | 1-3, 7-11, 15-19 |
| A | CN 111401561 A (TSINGHUA UNIVERSITY) 10 July 2020 (2020-07-10)<br>      entire document | 1-19 |
| A | CN 111626423 A (SUQIAN COLLEGE) 04 September 2020 (2020-09-04)<br>      entire document | 1-19 |

☐ Further documents are listed in the continuation of Box C.          ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 October 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/112012** |

| Patent document cited in search report | | | Publication date (day/month/year) | Patent family member(s) | | | Publication date (day/month/year) |
| --- | --- | --- | --- | --- | --- | --- | --- |
| CN | 108921296 | A | 30 November 2018 | CN | 108921296 | B | 28 December 2021 |
| CN | 113010302 | A | 22 June 2021 | | None | | |
| CN | 111401561 | A | 10 July 2020 | CN | 111401561 | B | 20 May 2022 |
| CN | 111626423 | A | 04 September 2020 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111010785
- CN 202110929047
- CN 202110928874
- CN 202110928873